# EUROPÄISCHE PATENTSCHRIFT

(11) **EP 4 151 135 B1**
(45) Veröffentlichungstag und Bekanntmachung des Hinweises auf die Patenterteilung: **03.12.2025**
(21) Anmeldenummer: 21196937.3
(22) Anmeldetag: 15.09.2021
(51) Int. Cl.: A47L 9/28, A47L 11/40

(54) **REINIGUNGSGERÄT UND REINIGUNGSSYSTEM**
CLEANING DEVICE AND CLEANING SYSTEM
APPAREIL DE NETTOYAGE ET SYSTÈME DE NETTOYAGE

(43) Veröffentlichungstag der Anmeldung: 22.03.2023
(73) Patentinhaber: Vorwerk & Co. Interholding GmbH, 42270 Wuppertal (DE)
(72) Erfinder: LINDNER, Monika, 42279 Wuppertal (DE); ERKEK, David, 5000 Aarau (CH); HÖHNE, Dirk, 42499 Hückeswagen (DE); SCHMIDT, Andreas, 40822 Mettmann (DE)
(74) Vertreter: Dr. Solf & Zapf Patent- und Rechtsanwalts PartG mbB

(56) Entgegenhaltungen:
- EP-A1- 3 705 010
- EP-A1- 3 725 206
- WO-A1-2019/083836
- DE-A1- 102015 220 840
- DE-A1- 102019 114 344
- KR-A- 20120 126 772
- KR-A- 20200 029 256

## Beschreibung

Die Erfindung betrifft ein Reinigungsgerät, insbesondere ein Reinigungsgerät, das zur autonomen Bewegung in einer Bearbeitungsumgebung ausgebildet ist. Das Reinigungsgerät weist mindestens eine elektrische Schnittstelle zum Zusammenwirken mit einer elektrischen Gegenschnittstelle mindestens einer Basisstation auf. Beim Zusammenwirken erfolgt beispielsweise eine elektrische Kontaktierung und ein Aufladen eines Energiespeichers des Reinigungsgeräts mittels einer an der elektrischen Schnittstelle bereitgestellten Spannung.

Das Reinigungsgerät ist zumindest dazu ausgebildet und eingerichtet, sich zu Servicezwecken in eine Serviceposition an einer Basisstation zu bewegen. Zumindest in der Serviceposition ist die elektrische Schnittstelle mit einer Spannung beaufschlagbar, insbesondere zum Laden des Energiespeichers des Reinigungsgeräts.

Gattungsgemäße Reinigungsgeräte sind im Stand der Technik in einer Vielzahl von Ausgestaltungen bekannt. Die Reinigungsgeräte sind beispielsweise als Saugroboter, Wischroboter oder Saug- und Wischroboter ausgebildet. Üblicherweise verfügen derartige Reinigungsgeräte über mindestens eine Datenverarbeitungseinrichtung, die mit einer Mehrzahl von Sensoren eine Navigation des Reinigungsgeräts in der Bearbeitungsumgebung gewährleistet und das Erledigen von Reinigungsaufgaben in der Bearbeitungsumgebung steuert. Insbesondere um eine systematische Bewegung des Reinigungsgeräts in der Bearbeitungsumgebung zu ermöglichen, wird beispielsweise mittels der Datenverarbeitungseinrichtung eine Umgebungskarte der Bearbeitungsumgebung angelegt und laufend angepasst oder eine bereitgestellte Umgebungskarte laufend angepasst. Die "Umgebungskarte" wird in einem Format bereitgehalten, das jedenfalls von der Datenverarbeitungseinrichtung verarbeitbar und interpretierbar ist.

Das Vorhandensein einer Umgebungskarte unterstützt beispielsweise ein Auffinden einer Basisstation zu Servicezwecken.

In Abhängigkeit von der Ausgestaltung des Reinigungsgeräts können die Servicezwecke, also die in der Serviceposition an einem Reinigungsgerät zu erledigenden Aufgaben, das Aufladen eines Energiespeichers, insbesondere eines Akkumulators, das Entleeren eines Schmutzsammelbehälters und/oder das Regenerieren von Feuchtreinigungsbelägen umfassen.

Insbesondere bei Reinigungssystemen mit mehreren Basisstationen und/oder mehreren Reinigungsgeräten besteht dabei die Herausforderung, dass der für ein bestimmtes Reinigungsgerät zu einem bestimmten Zeitpunkt erforderliche Servicebedarf nicht von jeder Basisstation im Reinigungssystem bearbeitet werden kann. Beispielsweise kann nur eine einzige Basisstation einen Schmutzsammelbehälter entleeren, während alle Basisstationen Energiespeicher aufladen können.

Das Dokument EP 3 705 010 A1 beschreibt ein Reinigungsgerät bzw. ein Reinigungssystem nach dem Oberbegriff der unabhängigen Ansprüche 1 und 9.

Um die für den aktuell erforderlichen Servicebedarf geeignete Basisstation ansteuern zu können, benötigt das Reinigungsgerät Informationen über den Servicefunktionsumfang der im Reinigungssystem eingesetzten Basisstation bzw. aller im Reinigungssystem eingesetzten Basisstationen.

Der Erfindung liegt daher die Aufgabe zu Grunde, ein Reinigungsgerät, ein Reinigungssystem und ein Computerprogrammprodukt anzugeben, die eine Ermittlung eines Servicefunktionsumfangs einer Basisstation ermöglichen.

Die vorgenannte Aufgabe ist bei einem gattungsgemäßen Reinigungsgerät gemäß dem Merkmalsinhalt des Kennzeichnungsteils des Anspruchs 1 dadurch gelöst, dass das Reinigungsgerät ferner zumindest derart ausgebildet und eingerichtet ist, zumindest in der Serviceposition mindestens einen Messwert einer an der elektrischen Schnittstelle anliegenden Spannung als Identifikationsmittel zu bestimmen. Alternativ oder zusätzlich dazu ist das Reinigungsgerät ferner zumindest derart ausgebildet und eingerichtet, mindestens einen Messwert eines an der elektrischen Schnittstelle anliegenden Spannungsverlaufs als Identifikationsmittel zu bestimmen.

Die elektrische Schnittstelle ist insbesondere die Ladeschnittstelle des Reinigungsgeräts zum Laden mindestens eines Energiespeichers des Reinigungsgeräts. Bei dem Energiespeicher handelt es sich beispielsweise um einen Akkumulator oder um einen Superkondensator.

Unter Verwendung des mindestens einen Identifikationsmittels, also des Messwerts mindestens einer an der elektrischen Schnittstelle anliegenden Spannung und/oder eines an der elektrischen Schnittstelle anliegenden Spannungsverlaufs, ermittelt das Reinigungsgerät, insbesondere eine Datenverarbeitungseinrichtung des Reinigungsgeräts, zumindest einen Servicefunktionsumfang der Basisstation. Der Servicefunktionsumfang umfasst Informationen über die Aufgaben, die von der jeweiligen Basisstation erledigt werden können, beispielsweise Energiespeicher laden, Schmutzsammelbehälter entleeren etc.

Jede Datenverarbeitungseinrichtung, insbesondere die Datenverarbeitungseinrichtung des Reinigungsgeräts, umfasst beispielsweise zumindest mindestens eine Prozessoreinrichtung zur Durchführung von Rechenoperationen, mindestens ein, insbesondere nicht flüchtiges, Speichermittel zum Speichern von Daten und vorzugsweise mindestens eine Kommunikationseinrichtung.

Alternativ oder zusätzlich dazu ist vorgesehen, dass das mindestens eine Identifikationsmittel, also der mindestens eine Messwert der Spannung und/oder der mindestens eine Messwert des Spannungsverlaufs, an mindestens einer Kommunikationsschnittstelle des Reinigungsgeräts zur Verwendung bei der Bestimmung eines Servicefunktionsumfangs durch eine, insbesondere räumlich beabstandete, Datenverarbeitungseinrichtung bereitgestellt wird. Die, insbesondere räumlich beabstandete, Datenverarbeitungseinrichtung ist beispielsweise ein über das Internet zugänglicher Server, insbesondere ein Cloud-Computer, eine mobile Datenverarbeitungseinrichtung eines Benutzers, beispielsweise ein Smartphone, ein Tablet oder ein Laptop, eine Datenverarbeitungseinrichtung eines weiteren Reinigungsgeräts und/oder eine Datenverarbeitungseinrichtung einer Basisstation.

Es ist vorgesehen, dass der Abgleich der Messwerte mit den gespeicherten Spannungsmesswerten eine Toleranz berücksichtigt, innerhalb der bei einer Abweichung des Messwerts von dem gespeicherten Spannungsmesswert gleichwohl eine Zuordnung eines Messwerts zu einem Spannungsmesswert erfolgt, beispielsweise eine Toleranz von ± 2 %, ± 5 % oder ± 10 % vom gespeicherten Spannungsmesswert.

Die an der elektrischen Schnittstelle anliegende Spannung ist beispielsweise eine standardisierte Ladespannung mit einer Abweichung, die übliche Toleranzbereiche überschreitet. Die Abweichung ist vorzugsweise für jede Art von Basisstation derart signifikant gewählt, dass sie sich eindeutig von üblichen Spannungstoleranzen unterscheidet und somit keine Fehlidentifikation erfolgen kann. Vorzugsweise ist die Abweichung temporär zum Zweck der Messung durch das Reinigungsgerät und wird für den eigentlichen Ladevorgang eines Energiespeichers wieder auf einen standardisierten Wert angepasst. Es ist folglich insbesondere vorgesehen, dass die an der elektrischen Schnittstelle anliegende Spannung nur zu einem vorbestimmten Zeitpunkt, nach einem vorbestimmten Zeitablauf oder für einen vorbestimmten Zeitraum verändert wird und anschließend wieder eine vorgesehene Ladespannung anliegt.

Beispielsweise liegt die an der elektrischen Schnittstelle anliegende Spannung zum Zwecke der Identifikation für jede Art von Basisstation einige Volt oberhalb oder unterhalb der für das Aufladen des Energiespeichers vorgesehenen Ladespannung. Es ist auch vorgesehen, dass die Basisstationen dauerhaft geringfügig unterschiedliche Ladespannungen, jeweils individuell kennzeichnend für eine Art Basisstation, bereitstellen. Die Spannung liegt dann einige Volt oberhalb oder unterhalb einer standardisierten Ladespannung.

Insbesondere ist vorgesehen, dass eine Mehrzahl von Messwerten bestimmt werden. Die Messung eines kontinuierlichen Spannungsverlaufs über einen vorgegebenen Zeitraum wird beispielsweise als ein Messwert angesehen.

Das Ermitteln des Messwerts der anliegenden bzw. bereitgestellten Spannung und/oder des Messwerts des Spannungsverlaufs erfolgt vorzugsweise mittels einer dem Energiespeicher, insbesondere einem Akkumulator, zugeordneten Ladesteuereinrichtung. Die Ladesteuereinrichtung ist üblicherweise dazu ausgebildet und eingerichtet, das Aufladen des Energiespeichers zu überwachen und zu steuern.

Beim Anordnen des Reinigungsgeräts in der Serviceposition an einer Basisstation wirkt zumindest die elektrische Schnittstelle des Reinigungsgeräts mit einer elektrischen Gegenschnittstelle der Basisstation derart zusammen, dass eine elektrische Spannung übertragbar ist, die an der elektrischen Gegenschnittstelle anliegt.

Das Reinigungsgerät weist beispielsweise mindestens einen Gebläsemotor, z. B. für Saugarbeiten, mindestens einen Fahrantrieb, beispielsweise mit mindestens drei Rollen oder Rädern, mindestens einen Motor für mindestens ein Reinigungswerkzeug, mindestens ein Reinigungswerkzeug, insbesondere mindestens eine rotierbare Bürste oder ein Feuchtreinigungswerkzeug, und/oder mindestens einen Sensor, vorzugsweise eine Mehrzahl an Sensoren, auf.

Die Basisstation weist zur Realisierung der Bereitstellung unterschiedlicher Spannungswerte an der elektrischen Gegenschnittstelle vorzugsweise eine Mehrzahl elektrischer Widerstände mit zueinander verschiedenen Widerstandswerten sowie eine Mehrzahl von Schaltelementen auf, die von einer Datenverarbeitungseinrichtung der Basisstation derart ansteuerbar sind, dass eine vorbestimmte Ausgangsspannung an der elektrischen Gegenschnittstelle anliegt.

Beispielsweise ist vorgesehen, dass die elektrische Schnittstelle mindestens zwei elektrische Kontakte aufweist, die mit Gegenkontakten an einer Basisstation physisch kontaktiert werden. Beispielsweise sind die elektrischen Kontakte bzw. die Gegenkontakte als federnd gelagerte Kontaktflächen oder als Kontaktstift und Kontaktbuchse ausgebildet.

Alternativ dazu ist beispielsweise vorgesehen, dass die elektrische Schnittstelle mindestens eine Sekundärspule aufweist, die zum Zusammenwirken mit einer Primärspule in einer Basisstation ausgebildet ist. Das Aufladen des Energiespeichers erfolgt dann induktiv, so dass kein physischer Kontakt zwischen der elektrischen Schnittstelle und der elektrische Gegenschnittstelle besteht, gleichwohl aber eine "Kontaktierung" besteht und ein Zusammenwirken erfolgt.

Die Erfindung weist gegenüber dem Stand der Technik den Vorteil auf, dass für die Ermittlung des Servicefunktionsumfangs keine zusätzliche Hardware erforderlich ist, da bekannte Reinigungsgeräte bereits über elektrische Schnittstellen, insbesondere zum Laden des Energiespeichers, sowie Lademanagementsysteme und Ladesteuerung verfügen. Durch die vorteilhafte Ermittlung des Servicefunktionsumfangs kann das Reinigungsgerät eine Basisstation eindeutig identifizieren und effizient in Abhängigkeit von dem aktuellen Servicebedarf im Rahmen der Reinigungsstrategie ansteuern.

Eine erste Ausgestaltung des erfindungsgemäßen Reinigungsgeräts sieht vor, dass das Ermitteln des Servicefunktionsumfangs den Abgleich zumindest des mindestens einen ermittelten Messwerts mit einem in mindestens einem Speichermittel bereitgehaltenen Spannungsmesswert erfolgt. Dabei sind in dem Speichermittel unterschiedliche Spannungsmesswerte Basisstationen mit unterschiedlichem Servicefunktionsumfang zugeordnet. Durch den Abgleich des ermittelten Messwerts für die Spannung mit den in dem Speichermittel gespeicherten Messwerten erfolgt unmittelbar eine Identifikation der Basisstation und damit eine Ermittlung des Servicefunktionsumfangs. Beispielsweise ist das Speichermittel als nicht flüchtiger Speicher oder als Datenbank, insbesondere in einem nicht flüchtigen Speicher, ausgebildet, in der die Spannungsmesswerte und die zugehörigen Servicefunktionsumfänge bereitgehalten werden.

Beispielsweise ist vorgesehen, dass das Speichermittel, insbesondere die Datenbank, von einer Datenverarbeitungseinrichtung des Reinigungsgeräts bereitgehalten wird. Der Datenverarbeitungseinrichtung wird der jeweils ermittelte Messwert bereitgestellt und eine Zuordnung bzw. ein Vergleich mit den gespeicherten Spannungsmesswerten durchgeführt.

Alternativ dazu ist vorgesehen, dass das Speichermittel, insbesondere die Datenbank, auf einer räumlich beabstandeten Datenverarbeitungseinrichtung bereitgehalten wird. Beispielsweise ist zur Ermittlung des Servicefunktionsumfangs vorgesehen, dass die Datenverarbeitungseinrichtung des Reinigungsgeräts über mindestens eine Kommunikationsschnittstelle auf das Speichermittel, insbesondere die Datenbank, auf der räumlich beabstandeten Datenverarbeitungseinrichtung zugreift, um den Vergleich des ermittelten Messwertes mit den gespeicherten Spannungsmesswerten vorzunehmen. Die räumlich beabstandete Datenverarbeitungseinrichtung ist beispielsweise ein über das Internet zugänglicher Server, insbesondere ein Cloud-Computer, eine mobile Datenverarbeitungseinrichtung eines Benutzers, beispielsweise ein Smartphone, ein Tablet oder ein Laptop, eine Datenverarbeitungseinrichtung eines weiteren Reinigungsgeräts und/oder eine Datenverarbeitungseinrichtung einer Basisstation.

Das Ermitteln des mindestens einen Messwertes der Spannung bzw. des Spannungsverlaufs kann zu unterschiedlichen Zeitpunkten erfolgen. Gemäß einer weiteren Ausgestaltung des Reinigungsgeräts hat es sich als vorteilhaft herausgestellt, wenn das Reinigungsgerät derart ausgebildet und eingerichtet ist, dass mindestens ein Messwert der Spannung und/oder mindestens ein Messwert des Spannungsverlaufs unmittelbar nach dem Anordnen des Reinigungsgeräts in der Serviceposition, insbesondere unmittelbar nach dem Kontaktieren der elektrischen Schnittstelle mit der elektrischen Gegenschnittstelle, ermittelt wird. Das Ermitteln des Messwertes oder einer Mehrzahl von Messwerten erfolgt folglich unmittelbar, also ohne zeitliche Verzögerung, nachdem das Reinigungsgerät ordnungsgemäß in der Serviceposition angeordnet ist und die elektrische Schnittstelle mit der elektrischen Gegenschnittstelle kontaktiert ist. Anschließend erfolgt das Ermitteln des Servicefunktionsumfangs, so dass der Servicefunktionsumfang unmittelbar nach dem Anordnen des Reinigungsgeräts in der Serviceposition einer Basisstation ermittelt ist. Vorzugsweise ist vorgesehen, dass das Ermitteln des Servicefunktionsumfangs bei jedem Anordnen eines Reinigungsgeräts in der Serviceposition einer Basisstation durchgeführt wird.

Ferner ist vorgesehen, dass alternativ oder zusätzlich mindestens ein Messwert der Spannung zu mindestens einem vorbestimmten Zeitpunkt ermittelt wird. Beispielsweise ist ein Zeitpunkt definiert, zu dem das Ermitteln des Messwertes erfolgt, beispielsweise nachdem ein Initialisierungsprozess zwischen Reinigungsgerät und Basisstation nach dem Anordnen in der Serviceposition durchgeführt worden ist, oder zu jedem anderen, vorbestimmbaren Zeitpunkt.

Besonders bevorzugt ist alternativ oder zusätzlich vorgesehen, dass mindestens ein Messwert der Spannung und/oder ein Messwert des Spannungsverlaufs nach mindestens einem vorbestimmten Zeitablauf nach dem Verbinden des Reinigungsgeräts, insbesondere dem Anordnen des Reinigungsgeräts in der Serviceposition, mit der Basisstation ermittelt wird. Beispielsweise ist der relevante Zeitpunkt, an dem der Messwert ermittelt wird, nach einem vorbestimmten Zeitablauf, nachdem die elektrische Schnittstelle mit der elektrischen Gegenschnittstelle kontaktiert ist, beispielsweise 1, 2, 3, 4, 5, 10 oder 15 Sekunden. Das Reinigungsgerät und die Basisstation sind vorteilhaft derart ausgebildet eingerichtet, dass zu diesem Zeitpunkt die relevante Spannung von der Basisstation an der elektrischen Gegenschnittstelle bereitgestellt wird bzw. zu diesem Zeitpunkt auch eine Erfassung durch das Reinigungsgerät durchgeführt wird.

Ferner ist vorgesehen, dass mindestens ein Messwert oder eine Mehrzahl von Messwerten über einen vorbestimmten Zeitraum erfasst werden. Beispielsweise erfolgt das Ermitteln von Messwerten oder mindestens eines Messwertes innerhalb von 10 oder 15 Sekunden nach dem Anordnen des Reinigungsgeräts in der Basisstation oder für einen vorbestimmten Zeitraum ab einem beliebigen, vorbestimmten Zeitpunkt, insbesondere nach dem Anordnen des Reinigungsgeräts in der Serviceposition.

Wird ein Messwert eines Spannungsverlaufs ermittelt, werden vorzugsweise eine Mehrzahl von Messwerten ermittelt. Der Spannungsverlauf über die Zeit ist vorzugsweise derart charakteristisch gewählt, dass er sich von anderen Spannungsverläufen über die Zeit deutlich unterscheidet und so über diesen charakteristischen Spannungsverlauf eine eindeutige Identifizierung des Servicefunktionsumfangs der Basisstation erfolgen kann. Der Messwert ist dann der Spannungsverlauf.

Vorteilhaft um den ermittelten Servicefunktionsumfang einer Basisstation für eine effiziente Arbeitsstrategie des Reinigungsgeräts berücksichtigen zu können, ist gemäß einer weiteren Ausgestaltung des Reinigungsgeräts vorgesehen, dass das Reinigungsgerät ferner derart ausgebildet und eingerichtet ist, dass der ermittelte Servicefunktionsumfang jeder Basisstation mit Positionsdaten der jeweiligen Basisstation in der Bearbeitungsumgebung, insbesondere in einer von dem Reinigungsgerät, vorzugsweise der Datenverarbeitungseinrichtung des Reinigungsgeräts, erstellten Umgebungskarte, verknüpft wird. Das Reinigungsgerät ordnet folglich den ermittelten Servicefunktionsumfang einer Position in der Bearbeitungsumgebung zu. Auf diese Weise kann das Reinigungsgerät, sofern es den von der Basisstation bereitgestellten Servicefunktionsumfang benötigt, diese Basisstation gezielt ansteuern.

Da die Position einer Basisstation durch einen Benutzer veränderbar ist, ist vorzugsweise vorgesehen, dass das Ermitteln des Servicefunktionsumfangs bei jedem Anordnen des Reinigungsgeräts in einer Serviceposition der Basisstation durchgeführt wird und gegebenenfalls die gespeicherten Daten, insbesondere zum Servicefunktionsumfang und zur Position der Basisstation, aktualisiert werden.

Vorteilhaft ist vorgesehen, dass das Reinigungsgerät den mit den jeweiligen Positionsdaten der Basisstation verknüpften Servicefunktionsumfang bei der Erstellung und/oder Anpassung eines Navigations- und/oder Reinigungsaufgabenplans des Reinigungsgeräts berücksichtigt. Das Reinigungsgerät bewegt sich vorzugsweise koordiniert in der Bearbeitungsumgebung, insbesondere bei der Durchführung von Reinigungsaufgaben werden beispielsweise systematische Pfade abgefahren und/oder zumindest Bereiche der Bearbeitungsumgebung gereinigt. Durch die Kenntnis und Position des Servicefunktionsumfangs einer Basisstation kann das Reinigungsgerät die Navigation und die Reinigungsaufgaben derart aufeinander abstimmen, dass eine Basisstation mit dem benötigen Servicefunktionsumfang genau zu einem Zeitpunkt oder in einem Zeitraum, zu dem der Servicefunktionsumfang von dem Reinigungsgerät benötigt wird, örtlich in der Nähe ist.

Insbesondere eine Navigations- und Reinigungsstrategie des Reinigungsgeräts lässt sich gemäß einer weiteren Ausgestaltung des Reinigungsgeräts dadurch weiter verbessern, dass das Reinigungsgerät derart ausgebildet und eingerichtet ist, unter Verwendung mindestens eines ermittelten Servicefunktionsumfangs in Verknüpfung mit Positionsdaten und mindestens einem weiteren Datum von: Daten über die Größe der Bearbeitungsumgebung, Daten über den Grad der Verschmutzung zumindest eines Teils der Bearbeitungsumgebung, Daten über einen Zustand eines Energiespeichers des Reinigungsgeräts, insbesondere den Ladezustand eines Akkus, Daten über die Regeneration eines Feuchtreinigungsbelags und/oder Daten über einen Füllstand eines Schmutzsammelbehälters, mindestens einen voraussichtlichen Zeitpunkt oder Zeitraum für einen Servicebedarf des Reinigungsgeräts zu ermitteln.

Ist der voraussichtliche Zeitpunkt oder Zeitraum für den Servicebedarf, also beispielsweise das Laden eines Energiespeichers, Reinigen eines Staubsammelbehälters etc., ermittelt, ist vorzugsweise vorgesehen, dass dieser bei der Erstellung und/oder Anpassung eines Navigations- und/oder Reinigungsaufgabenplans verwendet wird. Vorzugsweise ist vorgesehen, dass die Information über den voraussichtlichen Zeitpunkt oder Zeitraum derart verwendet wird, dass sich das Reinigungsgerät zum voraussichtlichen Servicezeitpunkt oder Servicezeitraum zumindest in örtlicher Nähe einer Basisstation befindet, die mit ihrem Servicefunktionsumfang einen zum voraussichtlichen Servicezeitpunkt erforderlichen Serviceumfang des Reinigungsgeräts bearbeiten kann. Insbesondere ist vorgesehen, dass der voraussichtliche Zeitpunkt oder Zeitraum des Servicebedarfs zur Abstimmung des Servicebedarfs mit weiteren Reinigungsgeräten verwendet wird, insbesondere dass die Belegung von mindestens einer Basisstation oder einer Mehrzahl von Basisstationen mit weiteren Reinigungsgeräten abgestimmt wird.

Auf diese Weise kann das Reinigungsgerät seine Navigations- und Reinigungsaufgaben effizient erledigen und die Zeiten für die Durchführung von Services an Basisstationen werden auf ein Minimum reduziert. Zudem wird verhindert, dass das Reinigungsgerät für die Erledigung von Serviceaufgaben unnötig lange Strecken zurücklegen muss.

Gemäß einer weiteren Ausgestaltung des Reinigungsgeräts ist vorgesehen, dass das Reinigungsgerät ferner derart ausgebildet und eingerichtet ist, insbesondere unter Verwendung der Datenverarbeitungseinrichtung des Reinigungsgeräts, einen aktuellen Servicebedarf des Reinigungsgeräts zu einem bestimmten Zeitpunkt zu ermitteln. Unter Verwendung von in einem Speichermittel gespeicherten Informationen von Serviceumfängen von verschiedenen Basisstationen erfolgt anschließend eine Auswahl mindestens einer geeigneten Basisstation und nachfolgend insbesondere eine Bewegung des Reinigungsgeräts zu der ausgewählten Basisstation mit bekannten Positionsdaten. Ist für keine Basisstation ein Servicefunktionsumfang bekannt, erfolgt vorzugsweise eine Bewegung zu einer beliebigen Basisstation zur Ermittlung des Servicefunktionsumfangs.

Das Reinigungsgerät ist vorzugsweise derart ausgebildet und eingerichtet, dass es zu jedem Zeitpunkt eine Auswahl aus einer Mehrzahl von Basisstationen durchführen kann. Ist beispielsweise eine Ladung des Energiespeichers erforderlich, muss aber ein Sammelbehälter für Schmutz noch nicht geleert werden, kann die Auswahl an einer Basisstation, die lediglich zum Laden des Energiespeichers geeignet ist, erfolgen. Muss beispielsweise zusätzlich ein Sammelbehälter von Schmutz gereinigt werden, ist allerdings die Basisstation, die diesen Servicefunktionsumfang bereitstellt, gerade belegt, so ist das Reinigungsgerät dazu eingerichtet und ausgebildet, zunächst eine erste Basisstation anzusteuern, um einen ersten Teil des Servicebedarfs zu bearbeiten, beispielsweise den Energiespeicher zu laden, und anschließend mindestens eine weitere Basisstation anzusteuern, um mindestens einen zweiten Teil eines Servicebedarfs zu bearbeiten, beispielsweise einen Schmutzsammelbehälters zu leeren. Das Reinigungsgerät ist folglich zur Auswahl mindestens einer Basisstation mit einem bekannten Servicefunktionsumfang ausgebildet und eingerichtet.

Vorzugsweise um die Effizienz der Erledigung von Reinigungsaufgaben weiter zu steigern, ist gemäß einer weiteren Ausgestaltung des Reinigungsgeräts vorgesehen, dass dieses ferner derart ausgebildet und eingerichtet, unter Verwendung mindestens eines ermittelten Servicefunktionsumfangs für mindestens eine Basisstation und unter Verwendung mindestens eines weiteren Reinigungscharakteristikums von: Daten zu einer üblichen Verschmutzung der Bearbeitungsumgebung, Daten zu einer gewünschten Reinigungsintensität der Bearbeitungsumgebung, Daten zur Aufnahmekapazität eines Schmutzsammelbehälters des Reinigungsgeräts, Daten über eine Regeneration eines Feuchtreinigungsbelages und/oder der maximalen Laufzeit eines Energiespeichers und/oder bei zurückliegenden Navigations- und/oder Reinigungsbewegungen ermittelte Daten zu einer üblichen Verschmutzung der Bearbeitungsumgebung, Daten zu einer gewünschten Reinigungsintensität der Bearbeitungsumgebung, Daten zur Aufnahmekapazität eines Schmutzsammelbehälters des Reinigungsgeräts, Daten über eine Regeneration eines Feuchtreinigungsbelages und/oder der maximalen Laufzeit eines Energiespeichers, mindestens einen optimierten Standort für die jeweilige Basisstation in der Basisstation zu ermitteln.

Unter Verwendung zumindest eines Teils der vorgenannten Daten kann das Reinigungsgerät einen optimierten Standort für jede Basisstation in Abhängigkeit von ihrem Servicefunktionsumfang ermitteln. So können Basisstationen, die lediglich zum Laden ausgebildet sind, an anderer Stelle angeordnet werden als solche, die zur Regeneration eines Feuchtreinigungsbelags oder zur Leerung eines Schmutzsammelbehälters geeignet sind.

Vorteilhaft ist vorgesehen, dass mindestens ein ermittelter, optimierter Standort über mindestens eine, vorzugsweise räumlich beabstandete, Anzeigeeinrichtung ausgegeben wird/werden. Beispielsweise handelt es sich bei der Anzeigeeinrichtung um eine mobile Datenverarbeitungseinrichtung eines Benutzers, beispielsweise ein Smartphone oder Tablet. "Räumlich beabstandet" bedeutet beispielsweise eine Anordnung nicht im oder am Gehäuse des Reinigungsgeräts.

Ein optimierter Standort zeichnet sich dadurch aus, dass er optimal den Anforderungen einer effizienten Navigations- und Reinigungsstrategie entspricht.

Vorzugsweise ist vorgesehen, dass das Reinigungsgerät derart ausgebildet und eingerichtet ist, eine Mehrzahl optimierter Standorte in der Bearbeitungsumgebung für eine Basisstation zu ermitteln, insbesondere die ermittelten, optimierten Standorte einem Nutzer über mindestens eine, vorzugsweise räumlich beabstandete, Anzeigeeinrichtung auszugeben. Das Reinigungsgerät ermittelt vorzugsweise auf Basis der vorstehend genannten Parameter eine Mehrzahl von Standorten, die, möglicherweise mit unterschiedlichen Eignungsgraden, als optimierte Standorte angesehen werden können.

Ferner ist auch vorgesehen, dass das Ermitteln mindestens eines Standorts, vorzugsweise einer Mehrzahl optimierter Standorte, auf einer räumlich beabstandeten Datenverarbeitungseinrichtung durchgeführt und anschließend dem Nutzer auf einer Anzeigeeinrichtung ausgegeben wird. Als räumlich beabstandete Datenverarbeitungseinrichtung eignet sich hier beispielsweise ein Server, insbesondere ein Cloud-Server, oder auch eine mobile Datenverarbeitungseinrichtung des Nutzers, beispielsweise ein Smartphone oder Tablet, das gleichzeitig als Anzeigeeinrichtung dienen kann, und/oder die Datenverarbeitungseinrichtung eines weiteren Reinigungsgeräts oder einer weiteren Basisstation.

Als besonders vorteilhaft hat sich gemäß einer weiteren Ausgestaltung herausgestellt, wenn vorgesehen ist, dass mindestens ein optimierter Standort, vorzugsweise eine Mehrzahl von optimierten Standorten, durch einen Benutzer über eine Eingabeeinrichtung, beispielsweise ein Tablet oder ein Smartphone, verwerfbar oder als zukünftiger Standort bestätigbar ist/sind. Wird ein optimierter Standort von dem Nutzer als optimierter Standort bestätigt, wird er von dem Reinigungsgerät als solcher gespeichert. Anschließend muss der Benutzer die Basisstation, zu der der optimierte Standort ermittelt worden ist, an den als optimierter Standort ermittelten Standort versetzen. Als optimierter Standort wird auch eine veränderte Ausrichtung einer Basisstation angesehen.

Um auf Wünsche des Benutzers bezüglich der Anordnung einer Basisstation eingehen zu können, ist gemäß einer weiteren Ausgestaltung vorgesehen, dass das Reinigungsgerät ferner derart eingerichtet und ausgebildet ist, dass es über mindestens eine Eingabeeinrichtung, beispielsweise eine an dem Reinigungsgerät ausgebildete Eingabeeinrichtung oder über eine räumlich beabstandete Eingabeeinrichtung über eine Kommunikationsschnittstelle, Daten über mindestens einen bevorzugten Standort in der Bearbeitungsumgebung empfangen kann. Der bevorzugte Standort wird dem Reinigungsgerät von dem Benutzer übermittelt. Das Reinigungsgerät ist zudem derart ausgebildet und eingerichtet, dass unter Verwendung der Daten mindestens eines bevorzugten Standortes, des ermittelten Servicefunktionsumfangs für mindestens eine Basisstation und unter Verwendung von Daten mindestens eines weiteren Reinigungscharakteristikums von Daten zu einer üblichen Verschmutzung der Bearbeitungsumgebung, Daten zu einer gewünschten Reinigungsintensität der Bearbeitungsumgebung, Daten zur Aufnahmekapazität eines Schmutzsammelbehälters, Daten über eine Regeneration eines Feuchtreinigungsbelages und/oder der maximalen Laufzeit eines Energiespeichers und/oder bei zurückliegenden Navigations- und/oder Arbeitsbewegungen ermittelte Daten zu einer üblichen Verschmutzung der Bearbeitungsumgebung, Daten zu einer gewünschten Reinigungsintensität der Bearbeitungsumgebung, Daten zur Aufnahmekapazität eines Schmutzsammelbehälters, Daten über eine Regeneration eines Feuchtreinigungsbelages und/oder der maximalen Laufzeit eines Energiespeichers der bevorzugte Standort hinsichtlich seiner Eignung als Standort im Rahmen eines Navigations- und/oder Reinigungsaufgabenplans bewertet wird. In Abhängigkeit von dieser Bewertung wird dem Benutzer vorzugsweise ein Ergebnis ausgegeben, ob eine Positionierung einer Basisstation an dem bevorzugten Standort durchgeführt werden soll oder ob der bevorzugte Standort nicht als Standort für eine Basisstation geeignet ist.

Ferner ist vorgesehen, dass der Benutzer eine Mehrzahl von bevorzugten Standorten über eine Eingabeeinrichtung eingeben kann und jeder der bevorzugten Standorte von dem Reinigungsgerät bezüglich seiner Eignung, insbesondere mit verschiedenen Graden der Eignung, bewertet wird.

Die eingangs genannte Aufgabe ist ferner gelöst durch ein Reinigungssystem, das mindestens eine Basisstation und mindestens ein Reinigungsgerät, insbesondere nach einem der vorgeschriebenen Ausführungsbeispiele, aufweist. Das Reinigungsgerät weist mindestens eine elektrische Schnittstelle, insbesondere Ladeschnittstelle, zum Zusammenwirken mit einer elektrischen Gegenschnittstelle, insbesondere elektrische Ladegegenschnittstelle, der Basisstation zumindest zum Aufladen eines Energiespeichers des Reinigungsgeräts auf. Das Reinigungsgerät ist dazu ausgebildet und eingerichtet, sich zumindest in einer Bearbeitungsumgebung autonom fortzubewegen, Reinigungsaufgaben in der Bearbeitungsumgebung zu erledigen und sich zu Servicezwecken in eine Serviceposition an mindestens einer Basisstation zu bewegen. **In** der Serviceposition ist über die elektrische Gegenschnittstelle und die elektrische Schnittstelle eine Spannung für den Energiespeicher des Reinigungsgeräts bereitstellbar bzw. wird bereitgestellt.

Das Reinigungsgerät ist zudem derart ausgebildet und eingerichtet, zumindest in der Serviceposition mindestens einen Messwert einer an der elektrischen Schnittstelle anliegenden Spannung und/oder mindestens einen Messwert eines an der elektrischen Schnittstelle anliegenden Spannungsverlaufs als Identifikationsmittel zu bestimmen. Unter Verwendung des Identifikationsmittels, also des mindestens einen Messwerts, wird zumindest ein Servicefunktionsumfang der Basisstation ermittelt oder das Identifikationsmittel, also der mindestens eine Messwert, wird an mindestens einer Kommunikationsschnittstelle zur Bestimmung des Servicefunktionsumfangs durch eine räumlich beabstandete Datenverarbeitungseinrichtung bereitgestellt und den bestimmten Servicefunktionsumfang von der räumlich beabstandeten Datenverarbeitungseinrichtung über die Kommunikationsschnittstelle empfangen.

Gemäß einer ersten Ausgestaltung des Reinigungssystems ist vorgesehen, dass mindestens zwei Reinigungsgeräte und/oder mindestens zwei Basisstationen vorhanden sind. Insbesondere ist jedes Reinigungsgerät dazu eingerichtet und ausgebildet, den Servicefunktionsumfang jeder Basisstation in der jeweiligen Serviceposition zu ermitteln, oder den mindestens einen Messwert an mindestens einer Kommunikationsschnittstelle zur Verwendung bei der Bestimmung des Servicefunktionsumfangs durch eine, insbesondere räumlich beabstandete, Datenverarbeitungseinrichtung bereitzustellen.

Eine weitere Ausgestaltung des Reinigungssystems sieht vor, dass mindestens zwei, insbesondere eine Mehrzahl von Basisstationen, vorhanden sind/ist, und dass eine Differenz der ermittelbaren Spannungen an der elektrischen Schnittstelle für die Basisstationen mit unterschiedlichem Funktionsumfang mindestens 0,5 V, insbesondere mindestens 1 V, bevorzugt mindestens 2 V, beträgt.

Die Differenz der von den Basisstationen bereitgestellten Spannungen, um die Basisstationen voneinander zu unterscheiden, unterscheidet sich folglich um mindestens 0,5 V, insbesondere um mindestens 1 V, vorzugsweise um mindestens 2 V. Je größer die Spannungsdifferenz ist, desto geringer ist das System anfällig für Fehlzuordnungen aufgrund von Spannungsschwankungen. Die Basisstation ist vorzugsweise dazu eingerichtet und ausgebildet, an der elektrischen Gegenschnittstelle unterschiedliche Spannungen bereitzustellen.

Insbesondere ist die Basisstation dazu eingerichtet und ausgebildet, die elektrische Gegenschnittstelle derart anzusteuern, dass die von dem Reinigungsgerät messbare Spannung, insbesondere zu mindestens einem vorbestimmten Zeitpunkt, zumindest temporär verändert wird und/oder dass insbesondere über einen vorbestimmten Zeitraum ein vorbestimmter Spannungsverlauf erzeugt wird.

Eine weitere Ausgestaltung des Reinigungssystems sieht vor, dass mindestens eine Datenverarbeitungseinrichtung vorhanden ist. Beispielsweise weist das Reinigungssystem eine räumlich beabstandete Datenverarbeitungseinrichtung auf, z.B. einen Server, oder eine Datenverarbeitungseinrichtung des Reinigungsgeräts wird verwendet. Die jeweilige Datenverarbeitungseinrichtung ist insbesondere derart eingerichtet und ausgebildet, zu mindestens einem Zeitpunkt einen Servicebedarf mindestens eines Reinigungsgeräts zu ermitteln und unter Verwendung des aktuellen Servicebedarfs eine Auswahl mindestens einer für diesen Servicebedarf zumindest teilweise geeigneten Basisstation zu treffen. Ferner ist die Dateiverarbeitungseinrichtung derart ausgebildet und eingerichtet, das Reinigungsgerät zu veranlassen, sich in die Serviceposition zumindest der ausgewählten Basisstation zu begeben oder das Reinigungsgerät zu veranlassen, sich zur Ermittlung des Servicefunktionsumfangs in die Serviceposition an einer beliebigen Basisstation zu begeben. Vorzugsweise werden von der Datenverarbeitungseinrichtung Daten an das Reinigungsgerät übermittelt, insbesondere an die Datenverarbeitungseinrichtung des Reinigungsgeräts, die Informationen enthalten, anhand derer die ausgewählte Basisstation identifizierbar ist.

Die eingangs genannte Aufgabe ist ferner gelöst durch ein Verfahren zum Betrieb mindestens eines Reinigungsgeräts, aufweisend mindestens eine elektrische Schnittstelle zum Zusammenwirken mit einer elektrischen Gegenschnittstelle mindestens einer Basisstation zumindest zum Aufladen eines Energiespeichers des Reinigungsgeräts. Das Reinigungsgerät ist dazu ausgebildet und eingerichtet, sich zumindest in einer Bearbeitungsumgebung autonom fortzubewegen, Reinigungsaufgaben zu erledigen und sich zu Servicezwecken in eine Serviceposition an einer Basisstation zu bewegen. In der Serviceposition wird über die elektrische Schnittstelle eine Spannung bereitgestellt. Das Verfahren umfasst mindestens die Verfahrensschritte:
- Bestimmen mindestens eines Messwerts der Spannung an der elektrischen Schnittstelle des Reinigungsgeräts in der Serviceposition und/oder Bestimmen mindestens eines Messwerts eines Spannungsverlaufs an der elektrischen Schnittstelle des Reinigungsgeräts in der Serviceposition als Identifikationsmittel,
- Ermitteln zumindest eines Servicefunktionsumfangs der Basisstation unter Verwendung des Identifikationsmittels durch Abgleich zumindest des ermittelten Messwerts der Spannung und/oder des Messwerts des Spannungsverlaufs mit in mindestens einem Speichermittel, insbesondere einer Datenbank, bereitgehaltenen Spannungsmesswerten, wobei die in dem Speichermittel, insbesondere der Datenbank, bereitgehaltenen Spannungsmesswerte Daten zum Servicefunktionsumfang verschiedener Basisstationen zugeordnet sind.

Ferner betrifft die Erfindung ein Computerprogrammprodukt, umfassend Befehle, die bei der Ausführung des Programms durch die Prozessoreinheit einer Datenverarbeitungseinrichtung diese veranlassen, zumindest einen erforderlichen, aktuellen Servicebedarf eines Reinigungsgeräts zu mindestens einem Zeitpunkt zu bestimmen, unter Verwendung von Daten zu bekannten und einzelnen Basisstationen zugeordneter Servicefunktionsumfänge mindestens eine geeignete Basisstation zur Bearbeitung zumindest eines Teils des aktuellen Servicebedarfs auszuwählen und das Reinigungsgerät zu veranlassen, sich in die Serviceposition an der ausgewählten Basisstation zu bewegen.

Das Computerprogrammprodukt kann entweder von der Datenverarbeitungseinrichtung des Reinigungsgeräts oder von einer räumlich beabstandeten Datenverarbeitungseinrichtung durchgeführt werden, die über mindestens eine Kommunikationsschnittstelle mit der Datenverarbeitungseinrichtung des Reinigungsgeräts in Verbindung steht. Die räumlich beabstandete Datenverarbeitungseinrichtung ist beispielsweise ein Server oder mobile Datenverarbeitungseinrichtung eines Benutzers, beispielsweise ein Smartphone oder ein Tablet. Das Computerprogrammprodukt steuert folglich die Bestimmung des erforderlichen Servicebedarfs und anschließend die Auswahl einer zur Bearbeitung des Servicebedarfs geeigneten Basisstation. Das Computerprogrammprodukt ist gemäß einer ersten Ausgestaltung vorzugsweise derart ausgebildet, dass auch eine Mehrzahl von Basisstationen zur Erledigung des Servicefunktionsumfangs von dem Reinigungsgerät angefahren werden, beispielsweise um jeweils einen Teil des Servicebedarfs zu bearbeiten. Das Computerprogrammprodukt steuert das Reinigungsgerät vorzugsweise derart, dass das Reinigungsgerät erst eine erste Basisstation zur Bearbeitung zumindest eines ersten Teils des Servicebedarfs und anschließend mindestens eine zweite Basisstation zur Bearbeitung zumindest eines zweiten Teils des Servicebedarfs ansteuert.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Reinigungsgeräts in Seitenansicht,
- Fig. 2: ein weiteres Ausführungsbeispiel eines Reinigungsgeräts in Seitenansicht,
- Fig. 3: ein weiteres Ausführungsbeispiel eines Reinigungsgeräts in teilweise geschnittener Seitenansicht,
- Fig. 4: ein Ausführungsbeispiel eines Reinigungsgeräts,
- Fig. 5: ein Ausführungsbeispiel einer Bearbeitungsumgebung,
- Fig. 6: ein Ausführungsbeispiel des erfindungsgemäßen Verfahrens in schematischer Darstellung, und
- Fig. 7: ein Spannungsverlauf über der Zeit an einer elektrischen Schnittstelle eines Reinigungsgeräts in einer Serviceposition an einer Basisstation.

**In** den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

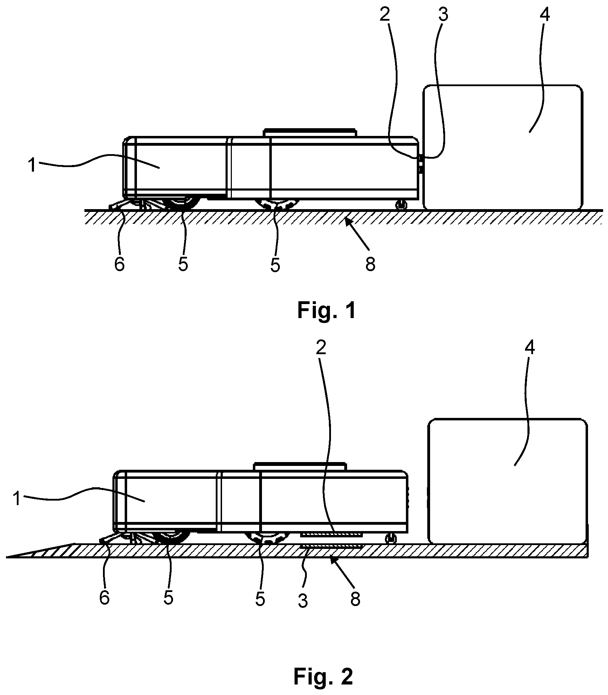

Fig. 1 zeigt ein Ausführungsbeispiel eines Reinigungsgeräts 1 in Seitenansicht. Das Reinigungsgerät 1 weist eine elektrische Schnittstelle 2 zum Zusammenwirken mit einer elektrischen Gegenschnittstelle 3 einer Basisstation 4 auf. Die Basisstation 4 ist zum Aufladen eines Energiespeichers, hier eines Akkumulators, des Reinigungsgeräts 1 ausgebildet. Das Reinigungsgerät 1 weist Fortbewegungsmittel 5 mit einem Fahrantrieb sowie mindestens ein Reinigungswerkzeug 6, hier eine rotierende Bürste, auf. Die elektrische Schnittstelle 2 weist zwei elektrische Kontakte und die elektrische Gegenschnittstelle 3 zwei elektrische Gegenkontakte auf, die miteinander in Kontakt stehen, sobald das Reinigungsgerät 1 vollständig in der Serviceposition an der Basisstation 4 angeordnet ist.

Fig. 2 zeigt ein weiteres Ausführungsbeispiel eines Reinigungsgeräts 1 in Seitenansicht. Das Reinigungsgerät 1 ist in einer Serviceposition 8 an einer Basisstation 4 angeordnet, wobei die Basisstation 4 anders als die Basisstation 4 gemäß Fig. 1 ausgebildet ist. Gemäß Fig. 2 ist die elektrische Schnittstelle 2 des Reinigungsgeräts 1 als Sekundärspule und die elektrische Gegenschnittstelle 3 der Basisstation 4 als Primärspule ausgebildet, so dass der Energiespeicher des Reinigungsgeräts 1 induktiv aufladbar ist.

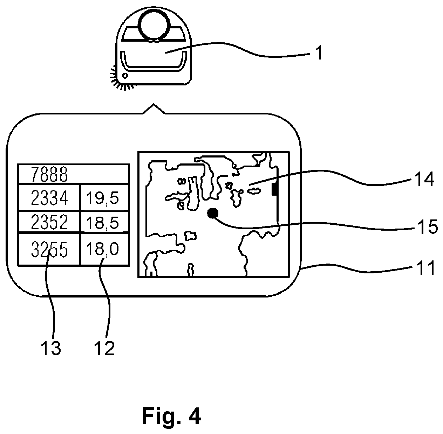

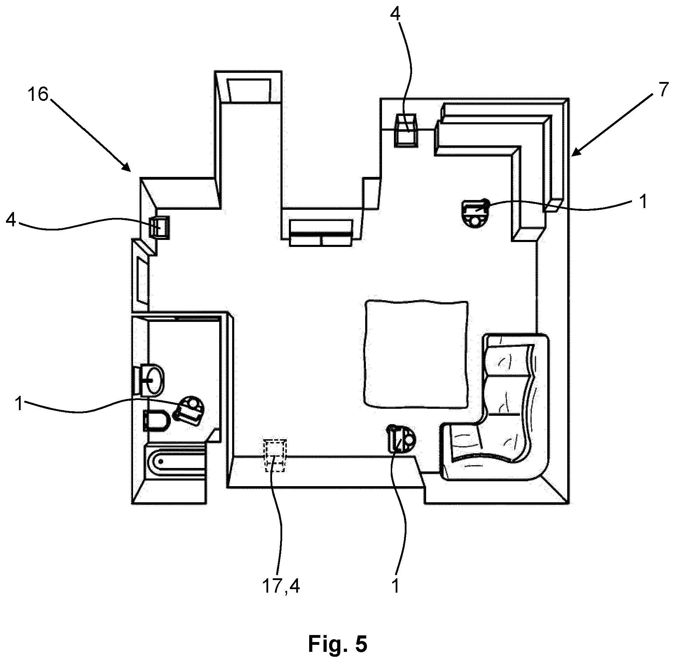

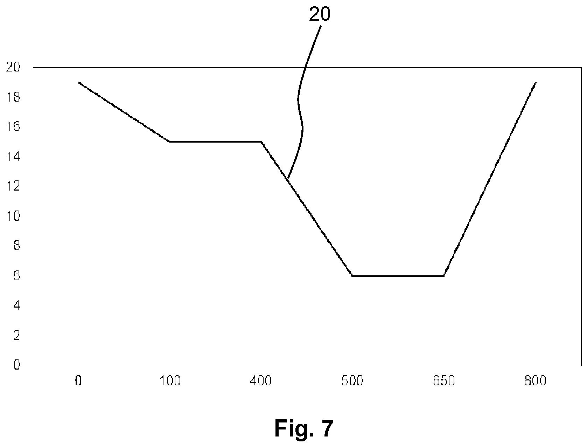

Die Reinigungsgeräte 1 der Ausführungsbeispiele der Fig. 1 und Fig. 2 sind dazu ausgebildet und eingerichtet, sich in einer, beispielhaft in Fig. 5 dargestellten, Bearbeitungsumgebung 7, hier einer Wohnung, autonom fortzubewegen und Reinigungsaufgaben zu erledigen. Beide Reinigungsgeräte 1 gemäß Fig. 1 und Fig. 2 sind ferner dazu ausgebildet und eingerichtet, sich zu Servicezwecken in die gemäß Fig. 1 und 2 dargestellte Serviceposition 8 einer Basisstation 4 zu bewegen, in der über die elektrische Schnittstelle 2 eine Spannung, insbesondere zum Laden des Energiespeichers des Reinigungsgeräts 1, bereitgestellt wird. Die Reinigungsgeräte 1 gemäß Fig. 1 und Fig. 2 sind zudem dazu ausgebildet und eingerichtet, zumindest in der Serviceposition 8 mindestens einen Messwert der an der elektrischen Schnittstelle 2 anliegenden Spannung und/oder mindestens einen Messwert eines an der elektrischen Schnittstelle 2 anliegenden Spannungsverlaufs 20 - siehe Fig. 7 - über einen Zeitraum als Identifikationsmittel zu bestimmen und unter Verwendung des Identifikationsmittels, also des mindestens einen Messwerts, zumindest einen Servicefunktionsumfang 13 - siehe Fig. 4 - der Basisstation 4 zu ermitteln.

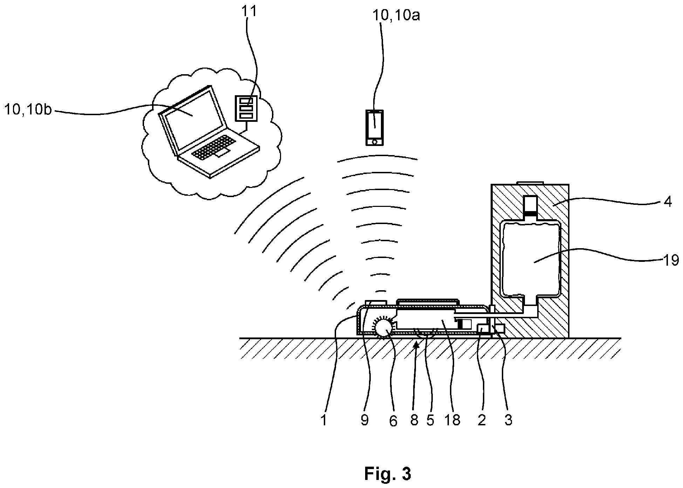

Fig. 3 zeigt ein alternatives Ausführungsbeispiel eines Reinigungsgeräts 1 in geschnittener Seitenansicht. Das Reinigungsgerät 1 weist ebenfalls eine elektrische Schnittstelle 2 auf, die in der dargestellten Serviceposition 8 mit einer elektrische Gegenschnittstelle 3 der Basisstation 4 elektrisch kontaktiert ist. Das Reinigungsgerät 1 weist ein Reinigungswerkzeug 6 in Form einer Bürstenwalze und Fortbewegungsmittel 5 mit Fahrantrieb auf, um sich in einer Bearbeitungsumgebung 7 - siehe Fig. 5 - autonom fortzubewegen. Das Reinigungsgerät 1 weist ferner einen Schmutzsammelbehälter 18 auf, der durch die Basisstation 4 entleerbar ist, indem der in dem Schmutzsammelbehälter 18 vorhandene Schmutz in einen Schmutzsammelbehälter 19 der Basisstation 4 abgesaugt wird. Der Servicefunktionsumfang 13 der Basisstation 4 umfasst folglich das Laden des Energiespeichers des Reinigungsgeräts 1 und das Entleeren des Schmutzsammelbehälters 18.

Das Reinigungsgerät 1 gemäß Fig. 3 ist zudem dazu ausgebildet und eingerichtet, zumindest in der dargestellten Serviceposition 8 mindestens einen Messwert der an der elektrischen Schnittstelle 2 anliegenden Spannung und/oder mindestens einen Messwert eines an der elektrischen Schnittstelle 2 anliegenden Spannungsverlaufs 20 - siehe beispielsweise Fig. 7 - als Identifikationsmittel zu bestimmen. Bei diesem Ausführungsbeispiel wird der bestimmte Messwert oder die bestimmten Messwerte - das Identifikationsmittel - an mindestens einer Kommunikationsschnittstelle 9 zur Bestimmung des Servicefunktionsumfangs 13 durch eine räumlich beabstandete Datenverarbeitungseinrichtung 10, die beispielsweise als Smartphone 10a oder als Server 10b ausgebildet ist, übermittelt.

Die räumlich beabstandete Datenverarbeitungseinrichtung 10 bestimmt den Servicefunktionsumfang 13 der Basisstation 4, insbesondere durch Abgleich mit Spannungsmesswerten 12 in einem Speichermittel 11 - siehe Fig. 4, und übermittelt den bestimmten Servicefunktionsumfang 13 über die Kommunikationsschnittstelle 9 zurück an das Reinigungsgerät 1, insbesondere eine Datenverarbeitungseinrichtung 10 des Reinigungsgeräts 1.

Fig. 4 zeigt ein Ausführungsbeispiel eines Reinigungsgeräts 1 in Draufsicht mit dem Inhalt eines symbolisierten Speichermittels 11. In dem Speichermittel 11 sind Spannungsmesswerte 12 und Daten zu zugehörigen Servicefunktionsumfängen 13 der jeweiligen Basisstation 4 abgelegt.

Das Speichermittel 11 ist vorzugsweise als nicht flüchtiger Speicher ausgebildet. Ferner beinhaltet das Speichermittel 11 Bearbeitungsumgebungsdaten 14, hier eine Kartierung der Bearbeitungsumgebung 7 - siehe Fig. 5 - mit Positionsdaten 15. In dem Speichermittel 11 ist jedem Spannungsmesswert 12 ein Servicefunktionsumfang 13 einer Basisstation 4 zugeordnet. Das Ermitteln des Servicefunktionsumfangs 13 erfolgt vorzugsweise durch Vergleich des ermittelten Messwerts - des Identifikationsmittels - mit den gespeicherten Spannungsmesswerten 12.

Alternativ dazu ist gemäß Fig. 3 vorgesehen, dass das Speichermittel 11 von einer räumlich beabstandeten Datenverarbeitungseinrichtung 10 bereitgehalten wird, beispielsweise einem über das Internet zugänglichen Server 10b, wobei das Speichermittel 11 über die Kommunikationsschnittstelle 9 des Reinigungsgeräts 1 für die Datenverarbeitungseinrichtung des Reinigungsgeräts 1 zugänglich ist.

Des Weiteren ist alternativ dazu vorgesehen, dass das Speichermittel von einer als Smartphone 10a ausgebildeten Datenverarbeitungseinrichtung 10 bereitgehalten wird und über die Kommunikationsschnittstelle 9 des Reinigungsgeräts 1 von der Datenverarbeitungseinrichtung des Reinigungsgeräts 1 auf das Speichermittel zugegriffen werden kann bzw. über die Kommunikationsschnittstelle 9 Daten aus dem Speichermittel abgerufen werden können.

Fig. 5 zeigt ein Ausführungsbeispiel einer Bearbeitungsumgebung 7 mit einer Mehrzahl von Reinigungsgeräten 1 und einer Mehrzahl von Basisstationen 4, die zusammen ein Reinigungssystem 16 bilden. Die Reinigungsgeräte 1 sind beispielsweise wie das Reinigungsgerät 1 gemäß Fig. 4 ausgebildet. Die Reinigungsgeräte 1 sind beispielsweise derart ausgebildet und eingerichtet, dass mindestens ein ermittelter Servicefunktionsumfang 13 jeder Basisstation 4 mit Positionsdaten 15 der jeweiligen Basisstation 4 in der Bearbeitungsumgebung 7 gemäß Fig. 5 verknüpft wird. Beispielsweise werden die Positionsdaten 14 und die Daten zum Servicefunktionsumfang 13 in Bearbeitungsumgebungsdaten 14 gemäß Fig. 4 zusammengefasst. Die Bearbeitungsumgebungsdaten 14 sind beispielweise mit einer Umgebungskarte gleichzusetzen. Dadurch können die Positionsdaten 15 der Basisstation 4 mit dem zugehörigen Servicefunktionsumfang 13 bei der Erstellung und/oder Anpassung eines Navigations- und/oder Reinigungsaufgabenplans eines Reinigungsgeräts 1 berücksichtigt werden.

Mindestens eines der Reinigungsgeräte 1 gemäß Fig. 5 ist ferner derart ausgestaltet und eingerichtet, dass unter Verwendung des ermittelten Servicefunktionsumfangs 13 in Verknüpfung mit den Positionsdaten 15 und einem weiteren Datum, beispielsweise Daten über die Größe der Bearbeitungsumgebung 7 und Daten über den Grad der Verschmutzung zumindest eines Teils der Bearbeitungsumgebung 7, mindestens ein voraussichtlicher Zeitpunkt oder Zeitraum für einen Servicebedarf des Reinigungsgeräts 1 ermittelbar ist.

Der voraussichtliche Zeitpunkt oder Zeitraum für einen Servicebedarf wird bei der Erstellung und/oder Anpassung eines Navigations- und/oder Reinigungsaufgabenplans des Reinigungsgeräts 1 verwendet, so dass sich das Reinigungsgerät 1 zum voraussichtlichen Servicezeitpunkt zumindest in örtlicher Nähe einer der Basisstationen 4 befindet, die mit ihrem Servicefunktionsumfang 13 einen zum voraussichtlichen Servicezeitpunkt erforderlichen Serviceumfang des Reinigungsgeräts 1 zumindest teilweise, vorzugsweise vollständig, bearbeiten kann.

Mindestens eines der Reinigungsgeräte 1 gemäß Fig. 5 ist zudem derart ausgebildet und eingerichtet, unter Verwendung mindestens eines ermittelten Servicefunktionsumfangs 13 für eine Basisstation 4 und unter Verwendung von Daten mindestens eines weiteren Reinigungscharakteristikums, beispielsweise Daten zu einer üblichen Verschmutzung der Bearbeitungsumgebung 7, Daten zu einer gewünschten Reinigungsintensität und Daten zu einer Aufnahmekapazität des Schmutzsammelbehälters 18 mindestens einen optimierten Standort 17 für eine Basisstation 4 in der Bearbeitungsumgebung 7 zu ermitteln.

Der ermittelte, optimierte Standort 17 ist einem Benutzer beispielsweise über eine in Fig. 3 dargestellten Datenverarbeitungseinrichtung 10, insbesondere das Smartphone 10a, als Anzeigeeinrichtung ausgebbar. Die Datenverarbeitungseinrichtung 10, insbesondere in Form des Smartphones 10a, kann von dem Benutzer beispielsweise auch als Eingabeeinrichtung verwendet werden, um den von dem Reinigungsgerät 1 gemäß Fig. 5 vorgeschlagenen, optimierten Standort 17 zu verwerfen oder als zukünftigen Standort für eine Basisstation 4 mit einem bestimmten Servicefunktionsumfang 13 zu bestätigen.

Wird der optimierte Standort 17 als zukünftiger Standort bestätigt, muss anschließend von dem Benutzer an dem optimierten Standort 17 eine zusätzliche Basisstation 4 aufgestellt werden oder eine der vorhandenen Basisstationen 4 muss an diesen Standort 17 versetzt werden.

Das Reinigungssystem 16 gemäß Fig. 5 umfasst drei Reinigungsgeräte 1 sowie zwei Basisstationen 4. Die Basisstationen 4 sind dazu eingerichtet und ausgebildet, die elektrische Gegenschnittstelle 3 derart anzusteuern, dass die von dem Reinigungsgerät 1 messbare Spannung, insbesondere zu mindestens einem vorbestimmten Zeitpunkt, zumindest temporär verändert wird, und/oder dass, insbesondere über einen vorbestimmten Zeitraum, ein vorbestimmter Spannungsverlauf erzeugt wird.

Ferner sind alle Reinigungsgeräte 1 dazu eingerichtet und ausgebildet, zumindest in der Serviceposition 8 an mindestens einer Basisstation 4 mindestens einen Messwert der anliegenden Spannung und/oder mindestens einen Messwert eines Spannungsverlaufs 20 als Identifikationsmittel zu bestimmen.

Das Ermitteln des Servicefunktionsumfangs 13 erfolgt dann entweder gemäß den Ausführungsbeispielen der Fig. 1 und 2 durch die Reinigungsgeräte 1, insbesondere die jeweilige Datenverarbeitungseinrichtung der Reinigungsgeräte 1 selbst oder gemäß Fig. 3 auf einer von dem Reinigungsgerät 1 räumlich beabstandeten Datenverarbeitungseinrichtung 10, beispielsweise einem Smartphone 10a oder einem Server 10b.

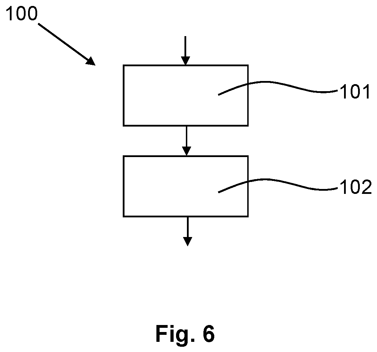

Fig. 6 zeigt schematisch den Ablauf eines Verfahrens 100 zum Betrieb eines Reinigungsgeräts 1, insbesondere eines Reinigungsgeräts 1 nach einem der vorbeschriebenen Ausführungsbeispiele. Das Reinigungsgerät 1 umfasst mindestens eine elektrische Schnittstelle 2 zum Zusammenwirken mit einer elektrischen Gegenschnittstelle 3 mindestens einer Basisstation 4 zumindest zum Aufladen eines Energiespeichers des Reinigungsgeräts 1.

Das Reinigungsgerät 1 ist dazu ausgebildet und eingerichtet, sich zumindest in einer Bearbeitungsumgebung 7 autonom fortzubewegen, Reinigungsaufgaben zu erledigen sowie sich zu Servicezwecken in eine Serviceposition 8 an einer Basisstation 4 zu bewegen. In der Serviceposition 8 wird über die elektrische Schnittstelle 2 eine Spannung, insbesondere für den Energiespeicher des Reinigungsgeräts 1, bereitgestellt.

Das Verfahren 100 umfasst die Verfahrensschritte:
- Bestimmen 101 mindestens eines Messwerts der Spannung an der elektrische Schnittstelle 2 des Reinigungsgeräts 1 in der Serviceposition 8 und/oder Bestimmen 101 mindestens eines Messwerts eines Spannungsverlaufs an der elektrischen Schnittstelle 2 des Reinigungsgeräts 1
- Ermitteln 102 zumindest eines Servicefunktionsumfangs 13 der Basisstation 4 durch Abgleich zumindest des ermittelten Messwerts der Spannung und/oder des Messwerts des Spannungsverlaufs 20 mit mindestens einem in einem Speichermittel 11 bereitgehaltenen Spannungsmesswert 12. Die in dem Speichermittel 11 bereitgehaltenen Spannungsmesswerte 12 sind jeweils Daten zum Servicefunktionsumfang einer jeweiligen Basisstation 4 zugeordnet.

Fig. 7 zeigt beispielhaft einen Spannungsverlauf 20 über die Zeit an einer elektrischen Schnittstelle 2 eines Reinigungsgeräts 1 in einer Serviceposition 8 an einer Basisstation 4. Auf der Abszisse ist die Zeit nach dem Verbinden der elektrischen Schnittstelle 2 mit der elektrischen Gegenschnittstelle 3 der Basisstation 4 in Millisekunden aufgetragen. Auf der Ordinate ist die an der elektrischen Schnittstelle 2 anliegende Spannung in Volt aufgetragen. Bei diesem Ausführungsbeispiel wird der Spannungsverlauf 20 über einen Zeitraum von 800 ms nach dem Verbinden der elektrischen Schnittstelle 2 ermittelt. Die standardisierte Ladespannung für den Energiespeicher an der elektrischen Schnittstelle 2 beträgt beispielsweise 19 V. Die Basisstation 4 ist hier derart ausgebildet und eingerichtet, dass die Spannung in einem Zeitraum von 100 ms auf 14,5 V abfällt, dann bis etwa 400 ms auf dieser Spannung verbleibt und nach etwa 400 ms bis 500 ms auf etwa 6 V abfällt. Anschließend nimmt die Spannung bis zum Zeitpunkt von 800 ms nach dem Verbinden wieder zu, so dass sie 800 ms nach dem Verbinden wieder etwa der standardisierten Ladespannung von 19 V entspricht. Dieser charakteristische Spannungsverlauf 20 wird von dem Reinigungsgerät 1 erfasst und als Identifikationsmittel bei der Ermittlung des Servicefunktionsumfangs 13 der Basisstation 4 verwendet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Reinigungsgerät
- 2: elektrische Schnittstelle
- 3: elektrische Gegenschnittstelle
- 4: Basisstation
- 5: Fortbewegungsmittel
- 6: Reinigungswerkzeug
- 7: Bearbeitungsumgebung
- 8: Serviceposition
- 9: Kommunikationsschnittstelle
- 10: Datenverarbeitungseinrichtung
- 10a: Smartphone
- 10b: Server
- 11: Speichermittel
- 12: Spannungsmesswerte
- 13: Servicefunktionsumfang
- 14: Bearbeitungsumgebungsdaten
- 15: Positionsdaten
- 16: Reinigungssystem
- 17: Optimierter Standort
- 18: Schmutzsammelbehälter
- 19: Schmutzsammelbehälter der Basisstation
- 20: Spannungsverlauf

- 100: Verfahren
- 101: Bestimmen
- 102: Ermitteln

## Patentansprüche

1. Reinigungsgerät (1), aufweisend mindestens eine elektrische Schnittstelle (2) zum Zusammenwirken mit einer elektrischen Gegenschnittstelle (3) mindestens einer Basisstation (4) zumindest zum Aufladen eines Energiespeichers des Reinigungsgeräts (1), wobei das Reinigungsgerät (1) zumindest dazu ausgebildet und eingerichtet ist, sich in mindestens einer Bearbeitungsumgebung (7) autonom fortzubewegen, Reinigungsaufgaben zu erledigen und sich zu Servicezwecken in eine Serviceposition (8) an einer Basisstation (4) zu bewegen, wobei das Reinigungsgerät (1) zumindest derart ausgebildet und eingerichtet ist, zumindest in der Serviceposition (8) mindestens einen Messwert einer an der elektrischen Schnittstelle (2) anliegenden Spannung und/oder mindestens einen Messwert eines an der elektrischen Schnittstelle (2) anliegenden Spannungsverlaufs (20) als Identifikationsmittel zu bestimmen,
**dadurch gekennzeichnet, dass**
das Reinigungsgerät (1) ferner zumindest derart ausgebildet und eingerichtet ist, unter Verwendung des Identifikationsmittels zumindest einen Servicefunktionsumfang (13) der Basisstation (4) zu ermitteln oder zumindest das Identifikationsmittel an mindestens einer Kommunikationsschnittstelle (9) zur Verwendung bei der Bestimmung eines Servicefunktionsumfangs (13) durch eine räumlich beabstandete Datenverarbeitungseinrichtung (10) bereitzustellen und den bestimmten Servicefunktionsumfang (13) von der räumlich beabstandeten Datenverarbeitungseinrichtung (10) über die Kommunikationsschnittstelle (9) zu empfangen.

2. Reinigungsgerät (1) nach Anspruch 1,
**dadurch gekennzeichnet, dass**
das Ermitteln des Servicefunktionsumfangs (13) den Abgleich zumindest des mindestens einen Messwerts mit in mindestens einem Speichermittel (11), insbesondere einer Datenbank, bereitgehaltenen Spannungsmesswerten umfasst, wobei unterschiedliche Spannungsmesswerte Basisstationen (4) mit unterschiedlichem Servicefunktionsumfang (13) zugeordnet sind, vorteilhaft dass das Speichermittel (11), insbesondere die Datenbank, von einer Datenverarbeitungseinrichtung des Reinigungsgeräts (1) bereitgehalten wird oder dass das Speichermittel (11), insbesondere die Datenbank, von einer räumlich beabstandeten Datenverarbeitungseinrichtung (10) bereitgehalten wird, bevorzugt dass von einer Datenverarbeitungseinrichtung des Reinigungsgeräts (1) über mindestens eine Kommunikationsschnittstelle (9) auf das Speichermittel (11), insbesondere die Datenbank, zugegriffen wird.

3. Reinigungsgerät (1) nach Anspruch 1 oder 2,
**dadurch gekennzeichnet, dass**
das Reinigungsgerät (1) ferner derart ausgebildet und eingerichtet ist, dass mindestens ein Messwert der Spannung und/oder mindestens ein Messwert des Spannungsverlaufs unmittelbar nach dem Anordnen des Reinigungsgeräts (1) in der Serviceposition (8) ermittelt wird und/oder dass mindestens ein Messwert der Spannung zu mindestens einem vorbestimmten Zeitpunkt ermittelt wird und/oder dass mindestens ein Messwert der Spannung nach mindestens einem vorbestimmten Zeitablauf nach dem Anordnen des Reinigungsgeräts (1) in der Serviceposition (8) ermittelt wird.

4. Reinigungsgerät (1) nach einem der Ansprüche 1 bis 3,
**dadurch gekennzeichnet, dass**
das Reinigungsgerät (1) ferner derart ausgebildet und eingerichtet ist, dass der ermittelte Servicefunktionsumfang (13) für jede Basisstation (4) mit Positionsdaten der jeweiligen Basisstation (4) in der Bearbeitungsumgebung (7) verknüpft wird, insbesondere dass der Servicefunktionsumfang (13) in Verknüpfung mit den Positionsdaten (15) bei der Erstellung und/oder Anpassung eines Navigations- und/oder Reinigungsaufgabenplans des Reinigungsgeräts (1) berücksichtigt wird.

5. Reinigungsgerät (1) nach Anspruch 4,
**dadurch gekennzeichnet, dass**
das Reinigungsgerät (1) ferner derart ausgebildet und eingerichtet ist, unter Verwendung von mindestens einem ermittelten Servicefunktionsumfang (13) in Verknüpfung mit Positionsdaten (15) mindestens einer Basisstation (4) und mindestens einem weiteren Datum von: Daten über die Größe der Bearbeitungsumgebung (7), Daten über den Grad der Verschmutzung zumindest eines Teils der Bearbeitungsumgebung (7), Daten über einen Zustand eines Energiespeichers des Reinigungsgeräts (1), Daten über eine Regeneration eines Feuchtreinigungsbelages und/oder Daten über einen Füllstand eines Schmutzsammelbehälters (18), mindestens einen voraussichtlichen Zeitpunkt oder Zeitraum für einen Servicebedarf des Reinigungsgeräts (1) zu ermitteln, wobei der voraussichtliche Zeitpunkt oder Zeitraum bei der Erstellung und/oder Anpassung eines Navigations- und/oder Reinigungsaufgabenplans des Reinigungsgeräts (1) verwendet wird, insbesondere derart, dass sich das Reinigungsgerät (1) zum voraussichtlichen Zeitpunkt oder Zeitraum zumindest in örtlicher Nähe einer Basisstation (4) befindet, die mit ihrem Servicefunktionsumfang (13) einen zum voraussichtlichen Zeitpunkt oder Zeitraum erforderlichen Serviceumfang des Reinigungsgeräts (1) zumindest teilweise bearbeiten kann.

6. Reinigungsgerät (1) nach einem der Ansprüche 1 bis 5,
**dadurch gekennzeichnet, dass**
das Reinigungsgerät (1), insbesondere die Datenverarbeitungseinrichtung des Reinigungsgeräts (1), derart eingerichtet und ausgebildet ist, zu einem bestimmten Zeitpunkt einen aktuellen Servicebedarf des Reinigungsgeräts (1) zu ermitteln und unter Verwendung des aktuellen Servicebedarfs des Reinigungsgeräts (1) eine Auswahl mindestens einer für den ermittelten Servicebedarf zumindest teilweise geeigneten Basisstation (4), insbesondere aus einer in mindestens einem Speichermittel bereitgehaltenen Liste von Basisstationen (4), zu treffen, bevorzugt ferner nach der Auswahl eine Bewegung des Reinigungsgeräts (1) zumindest in Richtung einer ausgewählten Basisstation (4) mit bekannten Positionsdaten (15) zu veranlassen oder eine Bewegung zu mindestens einer beliebigen Basisstation (4) zur Ermittlung des Servicefunktionsumfangs (13) zu veranlassen.

7. Reinigungsgerät (1) nach einem der Ansprüche 1 bis 6,
**dadurch gekennzeichnet, dass**
das Reinigungsgerät (1) ferner derart ausgebildet und eingerichtet ist, unter Verwendung zumindest des ermittelten Servicefunktionsumfangs (13) für mindestens eine Basisstation (4) und unter Verwendung von Daten mindestens eines weiteren Reinigungscharakteristikums von: Daten zu einer üblichen Verschmutzung der Bearbeitungsumgebung (7), Daten zu einer gewünschten Reinigungsintensität der Bearbeitungsumgebung (7), Daten zur Aufnahmekapazität eines Schmutzsammelbehälters (18), Daten über eine Regeneration eines Feuchtreinigungsbelages und/oder der maximalen Laufzeit eines Energiespeichers, bei zurückliegenden Navigations- und/oder Reinigungsbewegungen ermittelte Daten zu einer üblichen Verschmutzung der Bearbeitungsumgebung (7), Daten zu einer gewünschten Reinigungsintensität der Bearbeitungsumgebung (7), Daten zur Aufnahmekapazität eines Schmutzsammelbehälters (18), Daten über eine Regeneration eines Feuchtreinigungsbelages und/oder der maximalen Laufzeit eines Energiespeichers, mindestens einen optimierten Standort (17) für die mindestens eine Basisstation (4) in der Bearbeitungsumgebung (7) zu ermitteln, insbesondere mindestens einen ermittelten, optimierten Standort (17) einem Benutzer über mindestens eine, vorzugsweise räumlich beabstandete, Anzeigeeinrichtung auszugeben, bevorzugt mindestens einen optimierten Standort (17) anhand mindestens einer Eingabe über eine Eingabeeinrichtung zu verwerfen oder als zukünftiger Standort zu bestätigen.

8. Reinigungsgerät (1) nach einem der Ansprüche 1 bis 7,
**dadurch gekennzeichnet, dass**
das Reinigungsgerät (1) derart eingerichtet und ausgebildet ist, über mindestens eine Eingabeeinrichtung Daten über mindestens einen bevorzugten Standort der Basisstation (4) in der Bearbeitungsumgebung (7) zu empfangen, und unter Verwendung der Daten zum bevorzugten Standort, des ermittelten Servicefunktionsumfangs (13) für mindestens eine Basisstation (4) und unter Verwendung von Daten mindestens eines weiteren Reinigungscharakteristikums von: Daten zu einer üblichen Verschmutzung der Bearbeitungsumgebung (7), Daten zu einer gewünschten Reinigungsintensität der Bearbeitungsumgebung (7), Daten zur Aufnahmekapazität eines Schmutzsammelbehälters (18), Daten über eine Regeneration eines Feuchtreinigungsbelages und/oder der maximalen Laufzeit eines Energiespeichers, bei zurückliegenden Navigations- und/oder Arbeitsbewegungen ermittelte Daten zu einer üblichen Verschmutzung der Bearbeitungsumgebung (7), Daten zu einer gewünschten Reinigungsintensität der Bearbeitungsumgebung (7), Daten zur Aufnahmekapazität eines Schmutzsammelbehälters (18), Daten über eine Regeneration eines Feuchtreinigungsbelages und/oder der maximalen Laufzeit eines Energiespeichers, den bevorzugten Standort hinsichtlich seiner Eignung als Standort im Rahmen eines Navigations- und/oder Reinigungsaufgabenplans zu bewerten.

9. Reinigungssystem (16), aufweisend mindestens eine Basisstation (4) und mindestens ein Reinigungsgerät (1) nach einem der Ansprüche 1 bis 8, wobei das Reinigungsgerät (1) mindestens eine elektrische Schnittstelle (2) zum Zusammenwirken mit einer elektrischen Gegenschnittstelle (3) der Basisstation (4) zumindest zum Aufladen mindestens eines Energiespeichers des Reinigungsgeräts (1) aufweist, wobei das Reinigungsgerät (1) zumindest dazu ausgebildet und eingerichtet ist, sich zumindest in einer Bearbeitungsumgebung (7) autonom fortzubewegen, Reinigungsaufgaben zu erledigen und sich zu Servicezwecken in eine Serviceposition (8) an einer Basisstation (4) zu bewegen, wobei in der Serviceposition (8) über die elektrische Gegenschnittstelle (3) und die elektrische Schnittstelle (2) eine Spannung bereitstellbar ist,
**dadurch gekennzeichnet, dass**
das Reinigungsgerät (1) ferner derart ausgebildet und eingerichtet ist, zumindest in der Serviceposition (8) mindestens einen Messwert der an der elektrischen Schnittstelle (2) anliegenden Spannung und/oder mindestens einen Messwert eines an der elektrischen Schnittstelle (2) anliegenden Spannungsverlaufs (20) als Identifikationsmittel zu bestimmen, und unter Verwendung des Identifikationsmittels zumindest einen Servicefunktionsumfang (13) der Basisstation (4) zu ermitteln oder zumindest das Identifikationsmittel an mindestens einer Kommunikationsschnittstelle (9) zur Verwendung bei der Bestimmung des Servicefunktionsumfangs (13) durch eine räumlich beabstandete Datenverarbeitungseinrichtung (10) bereitzustellen und den bestimmten Servicefunktionsumfang (13) von der räumlich beabstandeten Datenverarbeitungseinrichtung (10) über die Kommunikationsschnittstelle (9) zu empfangen.

10. Reinigungssystem (16) nach Anspruch 9,
**dadurch gekennzeichnet, dass**
mindestens zwei Reinigungsgeräte (1) und/oder mindestens zwei Basisstationen (4) vorhanden sind, insbesondere dass jedes Reinigungsgerät (1) dazu eingerichtet und ausgebildet ist, den Servicefunktionsumfang (13) jeder Basisstation (4) in der Serviceposition (8) zu ermitteln oder den mindestens einen Messwert an mindestens einer Kommunikationsschnittstelle (9) zur Verwendung bei der Bestimmung des Servicefunktionsumfangs (13) durch eine Datenverarbeitungseinrichtung (10) bereitzustellen.

11. Reinigungssystem (16) nach Anspruch 9 oder 10,
**dadurch gekennzeichnet, dass**
mindestens zwei, insbesondere eine Mehrzahl, von Basisstationen (4) vorhanden sind/ist, und dass eine Differenz der ermittelbaren Spannungen für Basisstationen (4) mit unterschiedlichem Funktionsumfang mindestens 0,5 V, insbesondere mindestens 1 V, bevorzugt mindestens 2 V, beträgt.

12. Reinigungssystem (16) nach einem der Ansprüche 9 bis 11,
**dadurch gekennzeichnet, dass**
die Basisstation (4) dazu eingerichtet und ausgebildet ist, die elektrische Gegenschnittstelle (3) derart anzusteuern, dass die von dem Reinigungsgerät (1) messbare Spannung, insbesondere zu mindestens einem vorbestimmten Zeitpunkt, zumindest temporär verändert wird und/oder dass, insbesondere zumindest über einen vorbestimmten Zeitraum, mindestens ein vorbestimmter Spannungsverlauf (20) erzeugt wird.

13. Reinigungssystem (16) nach einem der Ansprüche 9 bis 12,
**dadurch gekennzeichnet, dass**
mindestens eine Datenverarbeitungseinrichtung (10) vorhanden ist, und dass die Datenverarbeitungseinrichtung (10) derart eingerichtet und ausgebildet ist, zu mindestens einem Zeitpunkt einen Servicebedarf mindestens eines Reinigungsgeräts (1) zu ermitteln, und unter Verwendung des aktuellen Servicebedarfs mindestens eines Reinigungsgeräts (1) eine Auswahl mindestens einer für diesen Servicebedarf geeigneten Basisstation (4) zu treffen, und insbesondere das Reinigungsgerät (1) zu veranlassen, sich in die Serviceposition (8) der ausgewählten Basisstation (4) zu begeben oder das Reinigungsgerät (1) zu veranlassen, sich zur Ermittlung des Servicefunktionsumfangs (13) in die Serviceposition (8) an einer beliebigen Basisstation (4) zu begeben, vorzugsweise Daten an das Reinigungsgerät (1), insbesondere Daten an die Datenverarbeitungseinrichtung des Reinigungsgeräts (1), zu übermitteln, anhand derer die ausgewählte Basisstation (4) identifizierbar ist.

14. Verfahren (100) zum Betrieb mindestens eines Reinigungsgeräts (1), insbesondere nach einem der Ansprüche 1 bis 9, aufweisend mindestens eine elektrische Schnittstelle (2) zum Zusammenwirken mit einer elektrischen Gegenschnittstelle (3) mindestens einer Basisstation (4), wobei das Reinigungsgerät (1) zumindest derart ausgebildet und eingerichtet ist, sich in mindestens einer Bearbeitungsumgebung (7) autonom fortzubewegen, Reinigungsaufgaben zu erledigen und sich zu Servicezwecken in eine Serviceposition (8) an der Basisstation (4) zu bewegen, wobei in der Serviceposition (8) über die elektrische Schnittstelle eine Spannung bereitstellbar ist, mindestens umfassend die Verfahrensschritte:
- Bestimmen (101) mindestens eines Messwerts der Spannung an der elektrischen Schnittstelle (2) des Reinigungsgeräts (1) in der Serviceposition (8) und/oder Bestimmen (101) mindestens eines Messwerts eines Spannungsverlaufs (20) an der elektrischen Schnittstelle (2) des Reinigungsgeräts (1) in der Serviceposition (8) als Identifikationsmittel,
- Ermitteln (102) zumindest eines Servicefunktionsumfangs (13) der Basisstation (4) unter Verwendung des Identifikationsmittels durch Abgleich zumindest des ermittelten Messwerts der Spannung und/oder des Messwerts des Spannungsverlaufs (20) mit in mindestens einem Speichermittel, insbesondere einer Datenbank, bereitgehaltenen Spannungsmesswerten, wobei die in dem Speichermittel, insbesondere der Datenbank, bereitgehaltenen Spannungsmesswerte Daten zum Servicefunktionsumfang (13) verschiedener Basisstationen (4) zugeordnet sind.

15. Computerprogrammprodukt, umfassend Befehle, die bei der Ausführung des Programms durch die Prozessoreinheit einer Datenverarbeitungseinrichtung diese veranlassen, zu mindestens einem Zeitpunkt, zumindest einen aktuellen Servicebedarf eines Reinigungsgeräts (1) zu bestimmen, unter Verwendung von Daten zu bekannten und einzelnen Basisstationen (4) zugeordneter Servicefunktionsumfänge mindestens eine geeignete Basisstation (4) zur Bearbeitung zumindest eines Teils des aktuellen Servicebedarfs auszuwählen und das Reinigungsgerät (1) zu veranlassen, sich in die Serviceposition (8) an der ausgewählten Basisstation (4) zu bewegen.

## Claims

1. Cleaning device (1), having at least one electrical interface (2) for interacting with an electrical counter-interface (3) of at least one base station (4) at least for charging an energy storage device of the cleaning device (1), wherein the cleaning device (1) is at least designed and set up to move autonomously in at least one processing environment (7), to carry out cleaning tasks and to move into a service position (8) at a base station (4) for service purposes, wherein the cleaning device (1) is at least configured and set up in such a way that, at least when it is in the service position (8), at least one measured value of a voltage present at the electrical interface (2) and/or at least one measured value of a voltage curve (20) present at the electrical interface can be determined as a means of identification,
**characterized in that**
the cleaning device (1) is also at least configured and set up at least to determine, using the means of identification, at least one scope of service functions (13) of the base station (4) or at least to provide the means of identification at at least one communication interface (9) for use in the determination of a scope of service functions (13) by a spatially separated data processing device (10) and to receive the determined scope of service functions (13) from the spatially separated data processing device (10) vial the communication interface (9).

2. Cleaning device (1) according to claim 1,
**characterized in that**
the determination of the scope of service functions (13) comprises the comparison of at least one measured value with measured values of voltage kept available in a storage device (11), in particular a database, with different voltage measured values being assigned to base stations (4) with different scopes of service functions (13), advantageously that the storage device (11), specifically the database, is kept available by a data processing device of the cleaning device (1) or that the storage device (11), specifically the database, is kept available by a spatially separated data processing device (10), preferably that the storage device (11), specifically the database, is accessed by a data processing device of the cleaning device (1) via at least one communication interface (9).

3. Cleaning device (1) according to claim 1 or 2,
**characterized in that**
the cleaning device (1) is also configured and set up in such a way that at least one measured value of the voltage and/or at least one measured value of the voltage curve is determined immediately after the cleaning device (1) has been situated in the service position (8) and/or that at least one voltage measured value is determined at least a predetermined point in time and/or that at least one voltage measured value is determined after at least a predetermined elapse of time after the cleaning device (1) has been situated in the service position (8).

4. Cleaning device (1) according to one of the claims 1 to 3,
**characterized in that**
the cleaning device (1) is also configured and set up in such a way that the determined scope of service functions (13) for each base station (4) is linked to the position data of the respective base station (4) in the processing environment (7), in particular that the scope of service functions (13) in connection with the position data (15) is taken into account when creating and/or adjusting a navigation and/or cleaning task plan for the cleaning device (1).

5. Cleaning device (1) according to claim 4,
**characterized in that**
the cleaning device (1) is also configured and set up to determine, using at least one determined scope of service functions (13) in conjunction with position data (15) of at least one base station (4) and at least one other item of data from the following: data about the size of the processing environment (7), data about the degree of soiling of at least part of the processing environment (7), data about the status of an energy storage device of the cleaning device (1), data about regeneration of a wet cleaning pad and/or data about the fill status of a dirt collection container (18), at least one probable point in time or period of time for a service requirement for the cleaning device (1), with the probable point of time or period of time being used when creating and/or adjusting a navigation and/or cleaning task plan for the cleaning device (1), in particular in such a way that the cleaning device (1) will at least be located in the local vicinity of a base station (4), which, with its scope of service functions (13) can at least partially process a range of services for the cleaning device (1) that is required at the expected point of time or period of time.

6. Cleaning device (1) according to one of the claims 1 to 5,
**characterized in that**
the cleaning device (1), specifically the data processing device of the cleaning device (1), is configured and set up in such a way as to determine at a specific point in time a current service requirement for the cleaning device (1) and using the current service requirement of the cleaning device (1), to select at least one base station (4) that is at least partially suitable for the service requirement determined, in particular from a list of base stations (4), that are kept available in at least one storage device, preferably also after the selection, to direct the cleaning device (1) to move at least in the direction of a selected base station (4) with the known position data (15), or to direct it to move to at least any base station (4) to determine the range of service functions (13).

7. Cleaning device (1) according to one of the claims 1 to 6,
**characterized in that**
the cleaning device (1) is also configured and set up to determine, using at least the determined scope of service functions (13) for at least one base station (4) and data from at least one of the following additional cleaning features: data on the usual soiling of the processing environment (7), data on the desired cleaning intensity of the processing environment (7), data on the intake capacity of a dirt collection container (18), data on the regeneration of a wet cleaning pad and/or the maximum running time of an energy storage device, data on normal contamination of the processing environment (7) determined during previous navigation and/or cleaning movements, data on the desired cleaning intensity of the processing environment (7), data on the intake capacity of a dirt collection container (18), data on the regeneration of a wet cleaning pad and/or the maximum running time of an energy storage device, at least one optimized location (17) for at least one base station (4) in the processing environment (7), in particular to give at least one determined optimized location (17) to a user via at least one, preferably spatially separated, display device, preferably discarding at least one optimized location (17) based on at least one input via an input device or confirming it as a future location.

8. Cleaning device (1) according to one of the claims 1 to 7,
**characterized in that**
the cleaning device (1) is configured and set up for receiving data about at least one preferred location of the base station (4) in the processing environment (7) via at least one input device, and for using the data about the preferred location, the determined range of service functions (13) for at least one base station (4), and using data from at least of the following additional cleaning characteristics: data on the usual soiling of the processing environment (7), data on the desired cleaning intensity of the processing environment (7), data on the intake capacity of a dirt collection container (18), data on regeneration of a wet cleaning pad and/or the maximum running time of an energy storage device, data on normal soiling of the processing environment (7) determined during previous navigation and/or work movements, data on the desired cleaning intensity of the processing environment (7), data on the intake capacity of a dirt collection container (18), data on regeneration of a wet cleaning pad and/or the maximum running time of an energy storage device, to determine the preferred location for its suitability as a location in the context of a navigation and/or cleaning task plan.

9. Cleaning system (16), having at least one base station (4) and at least one cleaning device (1), according to one of the claims 1 to 8, with the cleaning device (1) having at least one electrical interface (2) for interacting with an electrical counter-interface (3) of the base station (4) at least for charging at least one energy storage device of the cleaning device (1), with the cleaning device (1) being at least configured and set up to move autonomously at least in a processing environment (7), to carry out cleaning tasks and to move into a service position (8) at a base station (4) for service purposes, wherein voltage can be provided in the service position (8) via the electrical counter-interface (3) and the electrical interface (2),
**characterized in that**
the cleaning device (1) is also configured and set up in such a way that, at least in the service position (8), to determine at least one measured value of the voltage present at the electrical interface (2) and/or at least one measured value of the voltage curve (20) as a means of identification, and using the means of identification, to determine at least one scope of service functions (13) of the base station (4) or to provide at least the means of identification at at least one communication interface (9) for use in determining the scope of service functions (13) by means of a spatially separated data processing device (10) and to receive the determined range of service functions (13) from the spatially separated data processing device (10) via the communication interface (9).

10. Cleaning system (16) according to claim 9,
**characterized in that**
at least two cleaning devices (1) and/or at least two base stations (4) are present, specifically that each cleaning device (1) is designed and set up to determine the scope of service functions (13) of each base station (4) in the service position (8) or to provide at least one measured value at at least one communication interface (9) for use in determining the scope of service functions (13) by means of a data processing device (10).

11. Cleaning system (16) according to claim 9 or 10,
**characterized in that**
at least two, in particular multiple base stations (4) are present, and that there is a difference in the voltages that can be determined for base stations (4) with a different scope of functions is at least 0.5 V, specifically at least 1 V, preferably at least 2 V.

12. Cleaning system (16) according to one of the claims 9 to 11,
**characterized in that**
the base station (4) is configured and set up to control the electrical counter-interface (3) in such a way that the voltage that can be measured by the cleaning device (1) is changed at least temporarily, specifically at least at a predetermined point in time, and/or that, specifically at least over a predetermined period of time, at least one predetermined voltage curve (20) is generated.

13. Cleaning system (16) according to one of the claims 9 to 12,
**characterized in that**
at least one data processing device (10) is present, and that the data processing device (10) is configured and set up to determine at least at one point in time, the requirement for service of at least one cleaning device (1), and using the current service requirement of at least one cleaning device (1), at least one base station (4) is selected that is suitable for this service requirement, and in particular that the cleaning device (1) is directed to go to the service position (8) of the selected base station (4) or the cleaning device (1) is directed to go to the service position (8) on any base station (4) in order to determine the scope of service functions (13), preferably to transmit data to the cleaning device (1), in particular data to the data processing device of the cleaning device (1), on the basis of which the chosen base station (4) can be identified.

14. Procedure (100) for operating at least one cleaning device (1), in particular according to one of the claims 1 to 9, that has at least one electrical interface (2) for interacting with an electrical counter-interface (3) of at least one base station (4), with the cleaning device (1) being at least configured and set up to move autonomously in at least one processing environment (7), to carry out cleaning tasks and to move into a service position (8) on the base station (4) for service purposes, and when it is in the service position (8), voltage can be provided via the electrical interface, which comprises at least the following procedural steps:
- Determination (101) of at least one measured value of the voltage at the electrical interface (2) of the cleaning device (1) in the service position (8) and/or determination (101) of at least one measured value of a voltage curve (20) at the electrical interface (2) of the cleaning device (1) in the service position (8) as a means of identification,
- Determination (102) of at least one sope of service functions (13) of the base station (4) using the means of identification by comparing at least the determined voltage measured value and/or the measured value of the voltage curve (20) with voltage measured values held available in at least one storage device, specifically a database, wherein the voltage measured values are held available in the storage device, specifically the database, are assigned to data on the scope of service functions (13) of different base stations (4).

15. Computer program product, comprising instructions which, when the program is executed by the processor unit of a data processing device, direct it to determine at least one current service requirement of a cleaning device (1) at least one point in time, to select at least one suitable base station (4) for processing at least part of the current service requirement using data on known ranges of service functions assigned to individual base stations (4) and to direct the cleaning device to move to the service position (8) at the selected base station (4).

## Revendications

1. Appareil de nettoyage (1), comprenant au moins une interface électrique (2) pour coopérer avec une contre-interface électrique (3) d'au moins une station de base (4) au moins pour charger un accumulateur d'énergie de l'appareil de nettoyage (1), l'appareil de nettoyage (1) étant au moins conçu et configuré pour se déplacer de manière autonome dans au moins un environnement de traitement (7), accomplir des tâches de nettoyage et se déplacer à des fins de service dans une position de service (8) au niveau d'une station de base (4), l'appareil de nettoyage (1) étant au moins conçu et configuré de manière à déterminer, au moins dans la position de service (8), au moins une valeur de mesure d'une tension appliquée à l'interface électrique (2) et/ou au moins une valeur de mesure d'une évolution de tension (20) appliquée à l'interface électrique (2) comme moyen d'identification,
**caractérisé en ce que**
l'appareil de nettoyage (1) est en outre au moins conçu et configuré pour déterminer, en utilisant le moyen d'identification, au moins une étendue de fonctions de service (13) de la station de base (4) ou au moins fournir le moyen d'identification au niveau d'au moins une interface de communication (9) pour utilisation dans la détermination d'une étendue de fonctions de service (13) par un dispositif de traitement de données spatialement distant (10) et recevoir l'étendue de fonctions de service déterminée (13) du dispositif de traitement de données spatialement distant (10) via l'interface de communication (9).

2. Appareil de nettoyage (1) selon la revendication 1,
**caractérisé en ce que**
la détermination de l'étendue de fonctions de service (13) comprend la comparaison d'au moins la au moins une valeur de mesure avec des valeurs de mesure de tension maintenues dans au moins un moyen de stockage (11), en particulier une base de données, différentes valeurs de mesure de tension étant associées à des stations de base (4) avec différentes étendues de fonctions de service (13), avantageusement le moyen de stockage (11), en particulier la base de données, étant maintenu par un dispositif de traitement de données de l'appareil de nettoyage (1) ou le moyen de stockage (11), en particulier la base de données, étant maintenu par un dispositif de traitement de données spatialement distant (10), de préférence un dispositif de traitement de données de l'appareil de nettoyage (1) accédant au moyen de stockage (11), en particulier la base de données, via au moins une interface de communication (9).

3. Appareil de nettoyage (1) selon la revendication 1 ou 2,
**caractérisé en ce que**
l'appareil de nettoyage (1) est en outre conçu et configuré de manière à ce qu'au moins une valeur de mesure de la tension et/ou au moins une valeur de mesure de l'évolution de tension soit déterminée immédiatement après le positionnement de l'appareil de nettoyage (1) dans la position de service (8) et/ou qu'au moins une valeur de mesure de la tension soit déterminée à au moins un moment prédéterminé et/ou qu'au moins une valeur de mesure de la tension soit déterminée après au moins un délai prédéterminé après le positionnement de l'appareil de nettoyage (1) dans la position de service (8).

4. Appareil de nettoyage (1) selon l'une des revendications 1 à 3,
**caractérisé en ce que**
l'appareil de nettoyage (1) est en outre conçu et configuré de manière à ce que l'étendue de fonctions de service déterminée (13) soit liée pour chaque station de base (4) avec des données de position de la station de base respective (4) dans l'environnement de traitement (7), en particulier l'étendue de fonctions de service (13) en liaison avec les données de position (15) étant prise en compte lors de la création et/ou de l'adaptation d'un plan de navigation et/ou de tâches de nettoyage de l'appareil de nettoyage (1).

5. Appareil de nettoyage (1) selon la revendication 4,
**caractérisé en ce que**
l'appareil de nettoyage (1) est en outre conçu et configuré pour déterminer, en utilisant au moins une étendue de fonctions de service déterminée (13) en liaison avec des données de position (15) d'au moins une station de base (4) et au moins une autre donnée parmi : des données sur la taille de l'environnement de traitement (7), des données sur le degré de salissure d'au moins une partie de l'environnement de traitement (7), des données sur un état d'un accumulateur d'énergie de l'appareil de nettoyage (1), des données sur une régénération d'un revêtement de nettoyage humide et/ou des données sur un niveau de remplissage d'un réservoir de collecte de saleté (18), au moins un moment ou une période probable pour un besoin de service de l'appareil de nettoyage (1), le moment ou la période probable étant utilisé lors de la création et/ou de l'adaptation d'un plan de navigation et/ou de tâches de nettoyage de l'appareil de nettoyage (1), en particulier de manière à ce que l'appareil de nettoyage (1) se trouve au moment ou à la période probable au moins à proximité locale d'une station de base (4) qui peut, avec son étendue de fonctions de service (13), traiter au moins partiellement une étendue de service requise de l'appareil de nettoyage (1) au moment ou à la période probable.

6. Appareil de nettoyage (1) selon l'une des revendications 1 à 5,
**caractérisé en ce que**
l'appareil de nettoyage (1), en particulier le dispositif de traitement de données de l'appareil de nettoyage (1), est configuré et conçu pour déterminer à un moment donné un besoin de service actuel de l'appareil de nettoyage (1) et, en utilisant le besoin de service actuel de l'appareil de nettoyage (1), effectuer une sélection d'au moins une station de base (4) au moins partiellement appropriée pour le besoin de service déterminé, en particulier à partir d'une liste de stations de base (4) maintenue dans au moins un moyen de stockage, de préférence en outre après la sélection provoquer un mouvement de l'appareil de nettoyage (1) au moins en direction d'une station de base sélectionnée (4) avec des données de position connues (15) ou provoquer un mouvement vers au moins une station de base quelconque (4) pour déterminer l'étendue de fonctions de service (13).

7. Appareil de nettoyage (1) selon l'une des revendications 1 à 6,
**caractérisé en ce que**
l'appareil de nettoyage (1) est en outre conçu et configuré pour déterminer, en utilisant au moins l'étendue de fonctions de service déterminée (13) pour au moins une station de base (4) et en utilisant des données d'au moins une autre caractéristique de nettoyage parmi: des données sur une salissure habituelle de l'environnement de traitement (7), des données sur une intensité de nettoyage souhaitée de l'environnement de traitement (7), des données sur la capacité de réception d'un réservoir de collecte de saleté (18), des données sur une régénération d'un revêtement de nettoyage humide et/ou la durée de fonctionnement maximale d'un accumulateur d'énergie, des données déterminées lors de mouvements de navigation et/ou de nettoyage passés sur une salissure habituelle de l'environnement de traitement (7), des données sur une intensité de nettoyage souhaitée de l'environnement de traitement (7), des données sur la capacité de réception d'un réservoir de collecte de saleté (18), des données sur une régénération d'un revêtement de nettoyage humide et/ou la durée de fonctionnement maximale d'un accumulateur d'énergie, au moins un emplacement optimisé (17) pour la au moins une station de base (4) dans l'environnement de traitement (7), en particulier sortir au moins un emplacement optimisé déterminé (17) à un utilisateur via au moins un dispositif d'affichage, de préférence spatialement distant, de préférence rejeter au moins un emplacement optimisé (17) sur la base d'au moins une entrée via un dispositif d'entrée ou confirmer comme futur emplacement.

8. Appareil de nettoyage (1) selon l'une des revendications 1 à 7,
**caractérisé en ce que**
l'appareil de nettoyage (1) est configuré et conçu pour recevoir via au moins un dispositif d'entrée des données sur au moins un emplacement préféré de la station de base (4) dans l'environnement de traitement (7), et en utilisant les données sur l'emplacement préféré, l'étendue de fonctions de service déterminée (13) pour au moins une station de base (4) et en utilisant des données d'au moins une autre caractéristique de nettoyage parmi: des données sur une salissure habituelle de l'environnement de traitement (7), des données sur une intensité de nettoyage souhaitée de l'environnement de traitement (7), des données sur la capacité de réception d'un réservoir de collecte de saleté (18), des données sur une régénération d'un revêtement de nettoyage humide et/ou la durée de fonctionnement maximale d'un accumulateur d'énergie, des données déterminées lors de mouvements de navigation et/ou de travail passés sur une salissure habituelle de l'environnement de traitement (7), des données sur une intensité de nettoyage souhaitée de l'environnement de traitement (7), des données sur la capacité de réception d'un réservoir de collecte de saleté (18), des données sur une régénération d'un revêtement de nettoyage humide et/ou la durée de fonctionnement maximale d'un accumulateur d'énergie, pour évaluer l'emplacement préféré quant à son aptitude comme emplacement dans le cadre d'un plan de navigation et/ou de tâches de nettoyage.

9. Système de nettoyage (16), comprenant au moins une station de base (4) et au moins un appareil de nettoyage (1) selon l'une des revendications 1 à 8, l'appareil de nettoyage (1) comprenant au moins une interface électrique (2) pour coopérer avec une contre-interface électrique (3) de la station de base (4) au moins pour charger au moins un accumulateur d'énergie de l'appareil de nettoyage (1), l'appareil de nettoyage (1) étant au moins conçu et configuré pour se déplacer de manière autonome au moins dans un environnement de traitement (7), accomplir des tâches de nettoyage et se déplacer à des fins de service dans une position de service (8) au niveau d'une station de base (4), une tension pouvant être fournie dans la position de service (8) via la contre-interface électrique (3) et l'interface électrique (2),
**caractérisé en ce que**
l'appareil de nettoyage (1) est en outre conçu et configuré pour déterminer, au moins dans la position de service (8), au moins une valeur de mesure de la tension appliquée à l'interface électrique (2) et/ou au moins une valeur de mesure d'une évolution de tension (20) appliquée à l'interface électrique (2) comme moyen d'identification, et déterminer en utilisant le moyen d'identification au moins une étendue de fonctions de service (13) de la station de base (4) ou au moins fournir le moyen d'identification au niveau d'au moins une interface de communication (9) pour utilisation dans la détermination de l'étendue de fonctions de service (13) par un dispositif de traitement de données spatialement distant (10) et recevoir l'étendue de fonctions de service déterminée (13) du dispositif de traitement de données spatialement distant (10) via l'interface de communication (9).

10. Système de nettoyage (16) selon la revendication 9,
**caractérisé en ce**
**qu'**au moins deux appareils de nettoyage (1) et/ou au moins deux stations de base (4) sont présents, en particulier chaque appareil de nettoyage (1) étant configuré et conçu pour déterminer l'étendue de fonctions de service (13) de chaque station de base (4) dans la position de service (8) ou pout fournir la au moins une valeur de mesure au niveau d'au moins une interface de communication (9) pour utilisation dans la détermination de l'étendue de fonctions de service (13) par un dispositif de traitement de données (10).

11. Système de nettoyage (16) selon la revendication 9 ou 10,
**caractérisé en ce que**
au moins deux, en particulier une pluralité, de stations de base (4) sont/est présentes, et qu'une différence des tensions déterminables pour des stations de base (4) avec différentes étendues de fonctions est d'au moins 0,5 V, en particulier au moins 1 V, de préférence au moins 2 V.

12. Système de nettoyage (16) selon l'une des revendications 9 à 11,
**caractérisé en ce que**
la station de base (4) est configurée et conçue pour commander la contre-interface électrique (3) de manière à ce que la tension mesurable par l'appareil de nettoyage (1), en particulier à au moins un moment prédéterminé, soit au moins temporairement modifiée et/ou qu'au moins une évolution de tension prédéterminée (20) soit générée, en particulier au moins sur une période prédéterminée.

13. Système de nettoyage (16) selon l'une des revendications 9 à 12,
**caractérisé en ce**
**qu'**au moins un dispositif de traitement de données (10) est présent, et le dispositif de traitement de données (10) est configuré et conçu pour déterminer à au moins un moment un besoin de service d'au moins un appareil de nettoyage (1), et en utilisant le besoin de service actuel d'au moins un appareil de nettoyage (1) effectuer une sélection d'au moins une station de base (4) appropriée pour ce besoin de service, et en particulier amener l'appareil de nettoyage (1) à se rendre dans la position de service (8) de la station de base sélectionnée (4) ou amener l'appareil de nettoyage (1) à se rendre dans la position de service (8) au niveau d'une station de base quelconque pour déterminer l'étendue de fonctions de service (13) station de base (4), de préférence transmettre des données à l'appareil de nettoyage (1), en particulier des données au dispositif de traitement de données de l'appareil de nettoyage (1), sur la base desquelles la station de base sélectionnée (4) est identifiable.

14. Procédé (100) pour le fonctionnement d'au moins un appareil de nettoyage (1), en particulier selon l'une des revendications 1 à 9, comprenant au moins une interface électrique (2) pour coopérer avec une contre-interface électrique (3) d'au moins une station de base (4), l'appareil de nettoyage (1) étant au moins conçu et configuré pour se déplacer de manière autonome dans au moins un environnement de traitement (7), accomplir des tâches de nettoyage et se déplacer à des fins de service dans une position de service (8) au niveau de la station de base (4), une tension pouvant être fournie dans la position de service (8) via l'interface électrique, comprenant au moins les étapes de procédé :
- déterminer (101) au moins une valeur de mesure de la tension au niveau de l'interface électrique (2) de l'appareil de nettoyage (1) dans la position de service (8) et/ou déterminer (101) au moins une valeur de mesure d'une évolution de tension (20) au niveau de l'interface électrique (2) de l'appareil de nettoyage (1) dans la position de service (8) comme moyen d'identification,
- déterminer (102) au moins une étendue de fonctions de service (13) de la station de base (4) en utilisant le moyen d'identification par comparaison d'au moins la valeur de mesure déterminée de la tension et/ou de la valeur de mesure de l'évolution de tension (20) avec des valeurs de mesure de tension maintenues dans au moins un moyen de stockage, en particulier une base de données, les valeurs de mesure de tension maintenues dans le moyen de stockage, en particulier la base de données, étant associées à des données sur l'étendue de fonctions de service (13) de diverses stations de base (4).

15. Produit de programme informatique, comprenant des instructions qui, lors de l'exécution du programme par l'unité de processeur d'un dispositif de traitement de données, amènent celui-ci à déterminer à au moins un moment au moins un besoin de service actuel d'un appareil de nettoyage (1), en utilisant des données sur des étendues de fonctions de service connues et associées à des stations de base individuelles (4) sélectionner au moins une station de base appropriée (4) pour traiter au moins une partie du besoin de service actuel et amener l'appareil de nettoyage (1) à se déplacer dans la position de service (8) au niveau de la station de base sélectionnée (4).
